# DEMANDE DE BREVET EUROPEEN

(11) **EP 4 809 805 A1**
(43) Date de publication de la demande: **23.09.2026**
(21) Numéro de dépôt: 25206011.6
(22) Date de dépôt: 01.10.2025
(51) Int. Cl.: A01C 21/00

(54) **MÉTHODE DE FERTILISATION PKH RAISONNÉE INTEROPÉRABLE EN AGRICULTURE DE PRÉCISION**

(30) Priorité: 20.03.2025 EP 25165155
(71) Demandeur: Polyor SAS, 54000 Nancy (FR)
(72) Inventeur: CLAUDE, Pierre-Philippe, 54000 Nancy (FR)

(57) **Abrégé**

Méthode de fertilisation raisonnée dite PKH interopérable en agriculture de précision et conseil agronomique dédiés à la conservation des sols et l'agriculture durable de grandes culture à graines non-*Fabaceae* comportant la formation sur la base d'unités cartographiques locales de courbes de réponses décrivant les doses d'application d'engrais phosphoriques et potassique dPK, les seuils critiques en phosphore et potassium telluriques cPK ainsi que les pH telluriques éventuels (pHe) fonction de du taux de fertilisation azotée TUN et donc de l'objectif de rendement protéique RDN correspondant

## Description

### État de l'art

### Seuils critiques pour P, K et Mg ?

La fertilisation P&K raisonnée est actuellement très imparfaite (Morel et al. 1992, Murrel 2021, Jordan-Meille et al. 2012, etc.). La préconisation des doses d'engrais P & K en agronomie est donc imprécise. Elle s'appuie sur des courbes de réponses *mitscherlichiennes* (sic) des rendements RDT aux teneurs en P tellurique et doses d'engrais P (Ussiri et al. 1998, et Morel et al. 1992, Colomb et al. 2007, Denoroy et al. 2012, Bolland et al. 1999, Lewis et al. 1991). L'équation de cette courbe de réponse est ***RDT = A ·* [1 *- exp(-c · (b · P + dP***))] lorsque A, b et c sont des coefficients empiriques, RDT le rendement agronomique de la culture (t/ha, qx/ha ou encore g/m²), P la teneur en P "échangeable" du sol et dP la dose d'engrais P, P et dP (mg-P/kg-sol ou kg-P/ha). Il est ainsi possible de calculer dP pour un RDT normalisé à 100% du potentiel de rendement ***dP** =* **(1 / *c*)** *·* ***ln*[*****c** ·* ***A* / *p* · (1 *+ R*)]** *- **b** · **P*** lorsque p est le ratio entre les prix des engrais et de la récolte, et R le taux marginal de rendement économique (marginal rate of return). On préconise ainsi des dP marginalement de plus en plus faibles selon l'augmentation des teneurs en P des sols tout en identifiant d'éventuels seuils critiques cPK en-dessous desquels la fertilisation dPK n'est plus impérative.

Cette approche *mitscherlichienne* est problématique puisque la réponse de RDT à dP n'est pas très marquée le P apporté étant rapidement fixé physico-chimiquement sous forme de composés calco-magnésiques et/ou alumino-ferriques. De plus, les relations RDT :: P mitscherlichiennes ne valent pas pour toutes les situations agronomiques. Les données pluriannuelles et multi - sites étant très onéreuses à obtenir, il faut compiler différentes études. Or, étant donné les différents RDT, ceux-ci doivent être normalisés, généralement sur une base 100% (Morel et al. 1992, Colomb et al. 2007).

Puisque cette normalisation masque la variabilité interannuelle et intersites, l'effet agronomique des dP sont peu ou pas détectables ne provoquant qu'un enrichissement graduel et à moyen terme des teneurs en P du sol et des seuils cPK difficilement interprétables. Par exemple, pour le calcul de dP, on utilise parfois des coefficients multiplicatifs d'exportation ; Comifer 2007) appliqués au rendement moyen de la culture plus ou moins exigeante en P et K. deux types de seuils P et K, Tr (teneur du sol en P, K dite de "renforcement") et Ti (teneur du sol en P, K dite "d'impasse") sont actuellement considérés comme impératifs lors du dosage et la préconisation des apports d'engrais PK (Comifer 2001, 2007). Une teneur de sol inférieur à Tr implique aujourd'hui qu'il est nécessaire d'apporter des engrais P/K, faute de quoi le rendement potentiel de la culture pourrait être compromis ; une teneur supérieure à Ti implique elle qu'il n'est pas nécessaire d'apporter des engrais P/K ; entre Tr et Ti on doit d'apporter une *fumure d'entretien.* L'apport d'engrais Mg au sol est lui préconisé comme complément aux apports d'engrais P et K afin de maintenir un équilibre P/K/Mg.

Il y a donc un intérêt à revoir, simplifier et préciser cette approche à la fertilisation raisonnée PK. Par exemple et selon Jordan-Meille 2009 les préconisations d'engrais P dans diverses pays européens, malgré en principe une même fonction dégressive selon P tellurique inorganique (supra) et pour un même type d'analyse de type [Pi] (mg-P / kg-sol) les Ti varies de 17 en Italie à plus de 65 en Belgique. Pire. Renneson et al. 2011 rapportent que pour la Belgique des coefficients de détermination (R²) pour les relations entre RDT (orge) et [Pi] *d'au plus* 50%, et encore sur un même site comprenant des parcelles établies depuis 1967 peu importe le mode d'extraction de Pi.

### Statut acido-basique du sol - SAB

L'amendement des sols par chaulage est réputé nécessaire pour l'ajustement du statut acido-basique du sol sous prétexte qu'il existerait un lien entre pH tellurique et biodisponibilité des éléments. Dans les faits cela n'est pas avéré si le pH du sol est dans une fourchette de valeurs prépondérantes en sols arables selon le lieu et la pratique culturale. Le problème technique doit être posé autrement, à savoir comment apprécier si le pH du sol dévie trop par rapport à ce qui est attendu en situation de bonne pratique agricoles les plus répandues ?

Établir le statut acido-basique SAB d'un sol implique sécher et préparer un prélèvement de terre via plusieurs sous-prélèvements (10 à 15) à une profondeur de 0-20 cm (labourée) en évitant les zones atypiques en utilisant une tarière, une bêche ou un outil spécifique tout en mélangeant les sous-échantillons avant d'en prélever environ 500 g pour analyse. La terre séchée passivement est tamisée à 2 mm pour éliminer les cailloux et débris. On mesure le pH du prélèvement à l'aide d'un pH-mètre en mélangeant 10 g de terre à 25 ml d'eau distillée (ratio 1:2,5) en laissant reposer 30 min avant de plonger l'électrode dans la suspension jusqu'à stabilisation de la mesure. Cette approche comporte donc le *prélèvement -* et non *l'échantillonnage,* de la parcelle puisque l'échantillonnage présuppose que l'unité expérimentale est homogène, ce qui n'est pas le cas d'une parcelle agricole.

Il existe aussi un paradigme selon lequel la fertilisation azotée acidifierait le sol par nitrification de l'ammonium. Or, du fait d'un certain bilan protonique plutôt favorable à l'exportation de proton H⁺ protéiques et aminés la relation entre fertilisation N et acidification du sol est plus qu'ambivalente.

In fine, le principal problème technique concernant le SAB demeure son évaluation trop souvent visant à justifier et calibrer l'amendement calcique - le « chaulage », du sol afin d'établir ou rétablir un certain pH jugée idéal. Or, la plupart de sols arables ont des pH entre 5.5 et 7.5 adaptés à la majorité des culture et la mobilisation de éléments majeurs et traces.

### Problème technique

Les doses recommandées d'engrais P&K dPK et les seuils telluriques critiques P&K cPK ont été jusqu'à aujourd'hui calculés à l'aide de courbes de réponse de Mitscherlich à plateau (Morel et al. 1992, Ussiri et al. 1998). Compte tenu de la rareté des données provenant d'expérimentation in situ à long-terme (*long-term experiments* LTE, angl.) les rendements agronomiques des différents sites x années doivent être « normalisé » sur base 1 (100%). Cela conduit à divers problèmes d'exactitude, de pertinence et de précision rendant ces préconisations pour le moins aléatoires. Donc, peu nombreuses et imprécises, les courbes *mitscherlichiennes* pour l'établissement de teneurs des sols en P & K (tPK) à titre de seuils critiques cPK ont vécues. De plus, le conseil agronomique peut véritablement s'appuyer que sur quelques variables AGRO précises comportant peu ou pas d'erreur d'échantillonnage, à savoir les rendements en grains récoltés et leurs teneurs en humidité et NPK ainsi que les taux de fertilisation NPK pratiqués par l'agriculteur. Au niveau de la parcelle et en conseil agronomique toutes les autre variables PEDO-CLIM sont imprécises et sont plutôt valorisables entant que *classificateurs faibles* alimentant lesdits algorithmes d'IA au sens entendus. Les PPFs traditionnels ont été trop dépendants de l'échantillonnage extensif du sol. Cela augmenta le coût des PPFs au point d'en devenir économiquement infaisable. Le problème technique et sa solution, tels que déjà évoqués dans FR2405783 et FR07534, seront réexaminés en démontrant davantage comment les seuils de cPK sont fonction du rendement.

Ce concept applicable aux cPK sera étendu au bilan protons H+ (Findenegg et al. 1986, Ping et al. 2015) en faisant correspondre l'acidification liée à la fertilisation N et les exportations d'N via les protéines de grain. Paradoxalement, ces concepts n'ont jamais conduit à une reconsidération du paradigme du pH/chaulage persistant du sol, du moins jusqu'à présent. Le problème technique lié au SAB du sol est donc plutôt l'absence de véritables seuils ou pH idéaux du fait d'une certaine résilience de la biodisponibilité des éléments majeurs NPK et traces. Une approche plus inspirée des « bilans protoniques » permettrait de simplifier la régie du SAB du sol en la liant elle aussi aux taux de fertilisation azoté TUN.

### Solution technique proposée

Afin de contourner lors du conseil agronomique au niveau de la parcelle ce recours aux courbes de réponses *mitscherlichiennes* trop imparfaites pour établir des seuils P & K telluriques supposément critiques et/ou aux pH de référence et le chaulage éventuels qu'ils impliquent la solution consiste en deux choses ;
> établir localement les teneurs telluriques tPK à titre de seuils cPK par la simple mise en relation des tPK à titre de cPK au niveau de la parcelle et les dose d'engrais PK dPK connues et/ou connaissables (perfectibles), voire directement les taux de fertilisation azotés TUN. Ces seuils cPK nouveau genre seront ainsi proportionnels aux taux de fertilisation azotée, phosphorique ou potassique, préconisés et les objectifs de rendements ainsi atteints ;
> établir localement par AIA des relations précises entre pH et TUN indiquant si ce pH éventuel (pHe) durable sur ce site ou cette parcelle en ce lieu et à ce niveau de fertilisation NPK sera éventuellement commensurable aux valeurs habituelles - « collectives » en quelque sorte, reconnues par l'agriculteur. Le cas échéant, et seulement si, des ajustements du statut acido-basique SAB du sol seront exceptionnellement préconisés.

Cette adaptation de SQT_EP3821688, BMK_EP4101280, CRP_EP4252516 et AZG_EP4491001 comprend maintenant le dosage, la formation et l'application au champ d'engrais phosphatés et potassiques en agriculture durable. Rappelons que selon ces précédentes inventions la dbase_AgroNum permettant de calibrer l'AIA est obtenue par intelligence artificielle collective CAIAC. Celle-ci consiste a appliquer réitérativement une règle heuristique qui consiste ici à retirer de dbase_APC les itinéraires techniques dont les rendements unitaire RUN de l'azote fertilisant sont soit trop élevés, soit trop faibles. En combinaison avec SQT_3821688 et/ou un quelconque algorithme d'IA prédictive cette approche est décrite avec précision en BMK_4101280 alinéas [0022] à [0025], [0036] et [0040] qu'aux revendications qui décrivent comment la durabilité d'un itinéraire technique itinéraire technique iTec est évaluée objectivement et impartialement ; ce criblage de dbase_APC est aussi décrit en AZG_EP449100 alinéas [0066] et [0067]. Les itinéraire technique iTec jugés non-durables ont des RUN trop soit trop élevés, soit trop faibles ne peuvent conduire à la conservation de la matière organique du sol MOS ; ce phénomène est a priori bien connu bien que mal implémenté par EUNEP 2016 et multiples autres expérimentateurs (Abiola et al., 2024; Baja et al., 2025; Dobermann et al., 2022; Guejjoud et al., 2025a, 2025b.; M 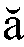 lina 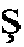 et al., 2022; Pereyra-Goday et al., 2025; Piccoli et al., 2025; Pirkó et al., 2020; Quemada et al., 2020; Quemada & Lassaletta, 2024; Rashid et al., 2022; Ravensbergen et al., 2024; Ren et al., 2022; Silva et al., 2021; Szymańska et al., 2025; Winnie et al., 2022; Xia et al., 2024; Zecchin et al. 2025 ; Zheng et al., 2020; Zhou et al., 2018)

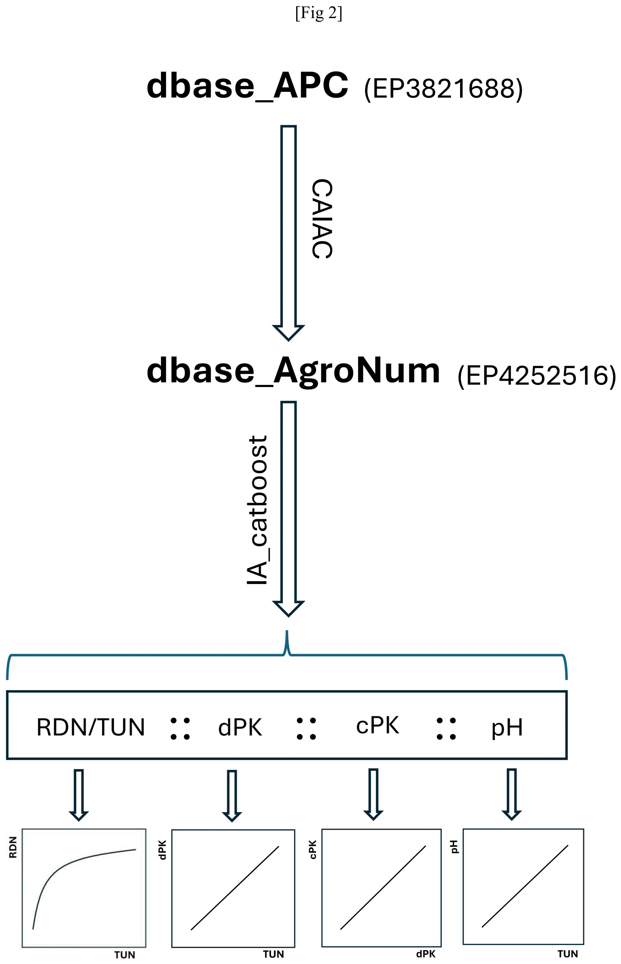

Ce parangonnage (alias *benchmarking,* angl.) de la durabilité des itinéraire technique iTec propre à la CAIAC et donc le criblage préalable de la dbase_APC et aussi mentionné dans CRP_EP4252516 aux alinéas [0005] à [0011], [0025], [0031], [0033], etc. Encore une fois, il s'agit d'identifier et de retirer de la dbase_APC les itinéraire technique iTec ne conduisant *pas* à la conservation de la matière organique du sol MOS du fait de RUN immodérées (supra). Cela ce fait réitérativement avant l'ajout de nouvelles données AGRO, PEDO et CLIM (APC) à la dbase et ainsi de suite jusqu'à l'utilisation complète des données APC disponibles à ce stade de développement de l'invention. Ce criblage réitératif de la dbase_APC à titre de CAIAC permet d'obtenir ce sous-ensemble qu'est la dbase_AgroNum servant à calibrer l'IA_catboost [Figure 2] déjà évoquée en CRP_EP4252516 afin de prédire a_AgroNum et les couples RDN/TUN constituant la courbe de réponse CRP à l'azote fertilisant. Or, c'est maintenant cette même dbase_AgroNum qui sert ici à calibrer ce même type d'IA_catboost mais cette fois-ci pour obtenir non CRP mais les diverses data AGRO en question, à savoir dPK, cPK et les éventuels pH telluriques fonction du taux de fertilisation N TUN à titre d'appréciation du statut acido-basique SAB du sol éventuel et durables, i.e. pHe..

Notons que toute intelligence artificielle est en partie collective et que l'intelligence collective est avantageusement implémentée artificiellement à l'aide d'algorithmes. Il existe une base de connaissance sur CAIAC capable de solutionner adéquatement des problèmes a priori complexes à l'aide de règles heuristiques simples (Adrdor 2025, Almaatouq et al. 2022., Becker et al. 2017, Centola 2022, Chmait 2017, Cui & Yasseri 2024, Delgado et al. 2019, Deng et al. 2025, Devatman et al. 2025, Gigerenzer & Luan 2022, Green 2023, Guilbeault et al. 2018 & 2021, Halpin 2025, Kannan 2025b & 2025a, Maksymiuk et al. 2021, Maleszka 2025, Raab & Gigerenzer 2005, Sapkota et al. 2025, Stefanelli et al. 2016, Tang et al. 2021, Vercammen et al. 2019, Weld et al.2014, Wolpert 2003, Yoo 2019 & 2021)

L'idée est de coupler les courbes de réponse CRP (EP4252516) aux bases de données contenant des taux d'application d'engrais P & K (dPK) et les teneurs telluriques tPK correspondantes. Il n'est plus nécessaire de prélever les sols de la parcelle ou au chaulage de la parcelle pour atteindre pHe maintenant simplement proportionnel au taux de fertilisation azotée TUN et son rendement protéique RDN correspondant. En effet, les efficacités élémentaires N, P & K a priori trop élevées diminuent l'exportation de protons H+ via les protéines de céréales et ceux générés par la nitrification des engrais riches en ammoniac. Réduire ces RUN, PfUE et KfUE trop élevées réduira le pH tellurique. In contrario, et puisque qu'en Europe 67 à 80 % de l'engrais azoté appliqué est sous forme d'ammonium, l'augmentation de ces efficacité augmentera le plus souvent ces pHe telluriques éventuels.

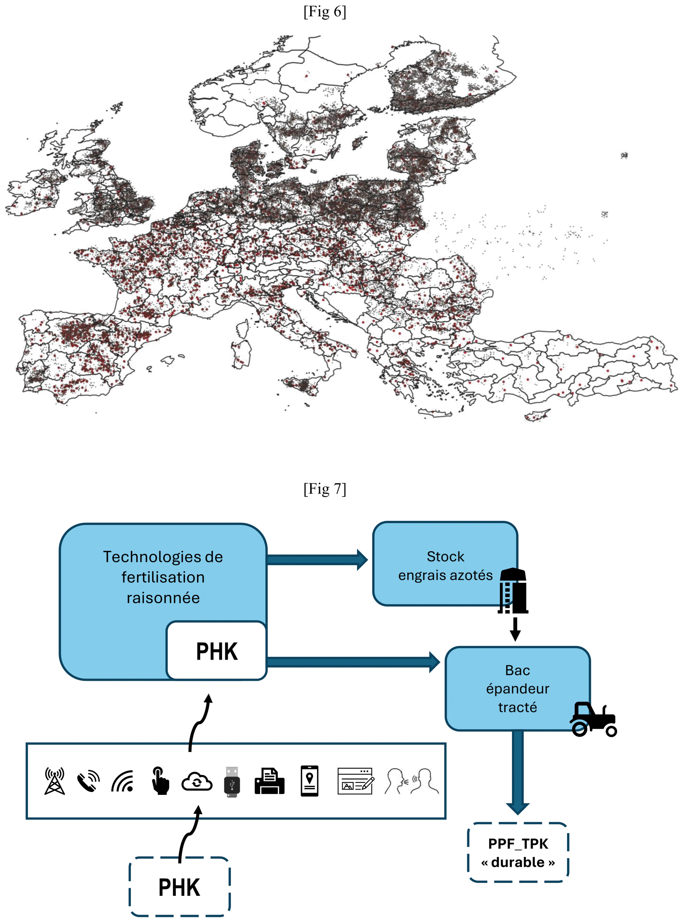

Pour la personne du métier une réalisation encore plus expéditive consisterait à réaliser intégralement SQT (EP3821688) → BMK (EP4101280) → CRP (EP4252516) → AZG (EP4491001) - partie intégrante de la base de connaissance et donc de l'état de la technique, et d'utiliser tel quelle la base de données de type dbase_AgroNum^{™} ainsi constituée d'itinéraires techniques pourvus de rendements unitaires de l'azote RUN tels que définis conduisant nécessairement par voie de CAIAC à la conservation de la matière organique du sol (MOS). Ce PPF est dérivé d'une réponse du rendement azoté RDN aux taux d'application d'engrais azotés TUN dictant les pH telluriques éventuels (pHe) et taux d'application recommandés d'engrais P & K (dPK), eux-mêmes fonction des taux de fertilisation azotée TUN correspondants, ces dPK dictant à leur tour les teneurs tellurique tPK à titre de seuils critiques cPK au-dessous desquels lesdites dPK sont impératives. Ces PPF sont interopérables avec l'agriculture de précision via un interface numérique [Figure 7] (infra).

Notons qu'il s'agit surtout à ce stade de grandes cultures à graines *non-Fabaceae* et que la constitution de bases de données telles que dbase_APC et dbase_AgroNum [Figure 2] (infra) à partir de data APC - open-source pour l'essentiel, est décrite dans EP3821688.

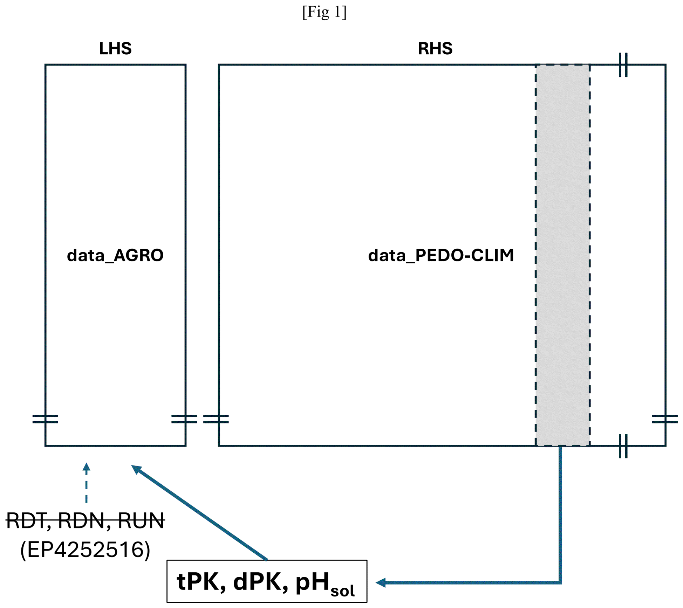

[Figure 1] La structure de la dbase, _APC ou AgroNum, est simple. Il s'agit de disposer à gauche de la dbase tabulaire les data agronomiques AGRO précises et/ou perfectibles prédits à l'aide des algorithmes d'IA, et à droite les data pédologiques et climatiques PEDO-CLIM à titre de classificateurs faibles alimentant ces algorithmes. Les dimensions de cette dbase L/RHS peut être aussi vaste que le permet les capacités de calcul et de stockage de l'infrastructure numérique ; c'est ce qui est indiqué par les signes = verticaux et horizontaux. En principe, plus il y a de données PEDO-CLIM - peu importe leur degré de corrélation apparente avec les données AGRO, plus l'algorithme d'IA sera capable de prédire avec précision les données AGRO ; « the more the better » (Breiman et al. 2001).

On voit clairement à la [Figure 1] que les teneurs tellurique tPK, P & K, sont maintenant considérées comme de données PEDO *et* AGRO à prédire parce qu'elles sont directement impliquées à titre de seuils critiques cPK dans l'élaboration des plans prévisionnels de fertilisation raisonnée. Puisque la dbase_AgroNum ne contient pas de data d'itinéraires techniques qui ne conduisent pas à la conservation de la matière organique du sol (MOS; [Figure 2]), les tPK prédits par AIA calibrée sur dbase_AgroNum sont maintenant eux aussi compatibles avec la conservation de la MOS et donc l'agriculture durables du fait - encore une fois, après avoir retiré les itinéraires techniques (itec) de la dbase_APC initiale afin les itinéraires techniques iTec associées à des rendements unitaires RUN soit trop élevés, soit trop faibles tel que décrit, réalisée et démontré dans CRP_EP4252516 et AZG_EP4491001 selon le principe énoncé dans BMK_EP4101280.

Concrètement, il s'agit donc d'une **méthode de fertilisation raisonnée dite PKH interopérable en agriculture de précision et conseil agronomique** dédiés à la conservation des sols et l'agriculture durable de grandes culture à graines *non-Fabaceae* comportant la formation sur la base d'unités cartographiques locales de courbes de réponses décrivant les doses d'application d'engrais phosphoriques et potassique dPK, les seuils critiques en phosphore et potassium telluriques cPK ainsi que les pH telluriques éventuels (pHe) fonction de du taux de fertilisation azotée TUN et donc de l'objectif de rendement protéique RDN correspondant ;
> caractérisée en ce que une base de données APC tabulaire dbase_APC comportant des data agronomique AGRO, pédologique PEDO et climatique CLIM est compartimentée en deux sections, une à la gauche du tableau dite LHS (*left hand side,* angl.) et l'autre à droite dite RHS *(right hand side,* angl.) et que un sous-ensemble de dbase_APC dit dbase_AgroNum ne contient que des itinéraires technique iTec avec rendements unitaires RUN de l'azote fertilisant ni trop élevés, ni trop faibles de manière à conduire à la conservation de la matière organique du sol MOS du fait d'un criblage réitératif préalable de dbase_APC ;
> et aussi maintenant et surtout caractérisé en ce que les rRSQ à titre de data AGRO servant au rétro-calcul de RUN sont remplacés par des valeurs de dPK, tPK à titre de cPK et pHe afin de calibrer pour chacune de ces variables un algorithme d'IA prédictive ;
> et en ce que les relations (fonctions) [dPK ::TUN] ou [dPK ::RDN] à titre de courbes de réponse indiquent les doses d'engrais PK à appliquer au champ pour pouvoir atteindre les objectifs de rendements RDN durables selon la courbe de réponse [RDN ::TUN] au sens de CRP_EP4252516 aux alinéas [0017] à [0033] à titre de plan prévisionnel de fertilisation PK,
> et en ce que les relations (fonctions) [tPK ::dPK], [tPK ::RDN] ou [tPK ::TUN] à titre de courbes de réponse établissent les seuils critiques cPK au-dessous desquels les susdites doses d'engrais PK doivent impérativement être appliquées pour atteindre ces susdits objectif de rendements RDN durables,
> et en ce que les relations (fonctions) [pHe ::TUN] , [pHe ::RDN] voire [pHe ::dPK] à titre de courbes de réponse déterminent le statut acido-basique SAB éventuel du sol atteint durablement à ces susdits taux de fertilisation N, P & K conduisant nécessairement à la conservation de la matière organique du sol MOS ;
> et en ce que ces courbes de réponse sont établies en précisant l'unité cartographique placés à gauche (LHS) de la dbase_AgroNum ne contenant que ces data d'itinéraire technique iTec durables conduisant à la conservation de la matière organique du sol MOS et mises en relation avec des data pédologiques PEDO & climatiques CLIM mais placées à droite (RHS) de cette même dbase_AgroNum sachant que les data AGRO_LHS sont précises voire perfectibles tandis que les data PEDO_RHS et CLIM_RHS sont perfectibles et commensurables, seules les data AGRO de type rendements agronomiques RDT, RDN, et RUN étant donc dépourvu d'erreurs d'échantillonnage statistiquement significatives ;
> et en ce que cette mise en relation est par la suite effectuée à l'aide d'algèbre linéaire par des modèles multivariés conventionnels de type glm (*general linear models,* angl.), voire plus avantageusement si implémentable d'intelligence artificielle par des algorithmes non-algébrique d'apprentissage de type cbt (*catergorical boosting,* angl.) ou encore tout autre algorithme assimilable tel que par exemple *gradiant boosting* (angl.), *random-forest* (angl.) ou *XGboosting* (angl.) ;

L'interopérabilité est avec l'agriculture de précision AP est effectuée à l'aide d'une technologie d'agriculture de précision via une interface numérique consistant en une courbe de réponse à l'engrais azoté TUN agissant dans un premier temps comme une interface informationnelle, et dans une seconde étape opérationnelle, l'utilisateur obtenant d'abord les estimations des doses d'engrais N, P et K ainsi que la valeur de pHe, puis intégrant en relayant ces informations, numériquement ou analogiquement, auxdites technologies d'agriculture de précision afin de former, dispenser en vrais, et appliquer au champ ces doses d'engrais N, P et K sur le terrain, et ce - là encore, via toute technologie de communication, à savoir les réseaux cellulaires, le WiFi, les cartes mémoire, les *clouds* (sic), les clés USB, le téléphone ou la télécopie, ou même par de simples activations manuelles, vocales ou écrites.

Précisions dès maintenant que ;
- **data AGRO** sont les données sur les rendements RDT et taux de fertilisation N, P et K de grandes cultures *non-Fabaceae* à graines telles que les céréales, le maïs et le colza ;
- **data PEDO** sont les données physico-chimiques sur les sols arables à travers la SAU européenne, y compris donc leurs teneurs et/ou stockes en C, N, P et K, leurs pH, porosités, etc. ;
- **data CLIM** sont les données climato-spatio-temporelles et donc météorologique avantageusement sous forme de séries temporelles de température, humidité, précipitations, etc. ;
- **R/LHS** dbase tabulaire et la base de donnée comprenant ces deux parties, une à gauche (*left hand side,* LHS) et l'autre à droite *(right hand side,* RHS) affichant l'ensemble des itinéraire technique iTec à titre d'observation, une par ligne, et leurs data AGRO, PEDO et CLIM associés ;
- **RUN** est le rendement unitaire ajusté de l'azote fertilisant : rendement azoté RDN par unité de fertilisation azotée TUN à savoir ***RUN* = (run^2)/(1400 *x TUN*^(-1.5)**), run étant le rendement unitaire simple → RDN/TUN, tandis que ;
- **rRSQ** est simplement RUN divisé par une certaines valeur iSQ indiquant le potentiel agronomique de la parcelle, ici et avantageusement selon Toth et al. 2017_bis ;
- **cPK** (cP ou cK selon le cas) sont les teneurs en P & K **(tPK)** du sol à titre de seuils critiques élémentaires du sol en P & K déterminant rendant l'application des dPK impérative généralement et avantageusement ici exprimés en mg-PK par kg d'échantillon de terre analysée ;
- **dPK** (dP ou dK selon le cas) sont les dP₂O₅ ou dK₂O, au choix i.e. les niveaux de fertilisation en P & K recommandées apportées au sol à titre de matière fertilisante généralement en équivalant P₂O₅ et K₂O, respectivement par hectare et par année ;
- **pHe** est le pH tellurique (du sol) *éventuel* à un niveau de fertilisation azotée dN (TUN) tel que recommandé dans le cade de la présente méthode de fertilisation raisonnée *sans* pour autant avoir à recourir à des amendements ou au chaulage pour modifier ce SAB du sol ;
- **AIA** et un quelconque algorithme d'intelligence artificiel prédictive et **CAIAC** une forme collective ce cette IA prédictive appliquant réitérativement une règle heuristique simple consistant ici en l'élimination de dbase_APC les itinéraires techniques iTec dont rendements unitaires ajusté RUN sont soit trop élevés ou trop faibles pour conduire à la conservation de la matière organique du sol MOS ;
- **glm & cbt** sont ici et à titre d'exemples des modèles prédictifs algébriques, linéaire voire multilinéaires dans le cas de glm et, dans le cas de cbt d'algorithmes dits d'intelligence artificielle prédictive avantageusement ici de type catboost (*categorical boosting*) ;
- **iTec** est l'itinéraire technique implémentant une pratique culturale en combinant à travers la campagne et la parcelle un ensemble cohérent d'intrants et d'outils en vue d'atteindre l'objectif de rendement selon le niveau de fertilisation préconisé ;
- **unité cartographique locale** est une délimitation graphique du territoire, avantageusement numérique en mode raster ou vecteur, avantageusement ici de type NUTS (nomenclature des unités territoriales statistiques) de niveaux 2 ou 3 (NUTS2 ou 3) facilitant les comparaisons entre pays, ou entre régions, d'un même ensemble (Eurostat 2022 ; https://ec.europa.eu/eurostat/).

Notons que l'invention implique que les *pH éventuels* (pHe) atteints lorsque les doses d'engrais N, P et K selon l'invention sont appliquées durablement au profit d'une conservation de la matière organique le sont *sans* chaulage ou l'apport d'amendements visant à modifier le statut acido-basique SAB du sol de la parcelle.

Toutes les grandes cultures à graines *non-Fabaceae* et notamment BTH (blé tendre d'hiver, *Triticum aestivum*), BTP (blé tendre de printemps, *T. aestivum*), ORH (orge d'hiver, *Hordeum vulgare*), ORP (orge de printemps, *H. vulgare*), SCL (seigle, *Secale cereale*), TRC (triticale, *Triticosecal* spp.), AVN (avoine, *Avena sativa*), CLZ (colza, *Brassica napus*), ZEA (maïs-grain, Zea mays) et TSL (tournesol, *Helianthus annus*) sont concernées.

La dbase_APC tabulaire comporte des data AGRO telles que le rendement en grains (RDT), et en protéines (RDN) et de rendement en protéines par unité d'engrais azoté (RUN) compilées à l'aide de modules raster et/ou vecteur implémentables en R^{®}, Python^{®} ou une quelconque plateforme informatique ainsi que des variables pédoclimatiques PEDO & CLIM, pertinent, informatives sans être forcément bien corrélées avec lesdites variables AGRO, et cela en prenant soins que ces data APC soient géoréférencés par les coordonnées géospatiales latitudes & longitudes centroïdes les plus au centre de parcelle. Les données pédoclimatiques PEDO & CLIM peuvent être télédétectées ou obtenues à l'aide de fonctions de pédo-transfert. De telles données géoréférencées sont stockées dans des bases de données numériques nationales & internationales sous forme de raster ou vecteur et identifiables au niveau de la parcelle. Certaines sont délimitées par des shapefile (shp ; eg. ESDB - https://esdac.jrc.ec.europa.eu/resource-type/european-soil-database-soil-properties ou encore renseignées au niveau d'unités cartographiques NUTS européennes (https://ec.eu-ropa.eu/eurostat/fr/web/nuts/background).

La dbase_AgroNum, sous-ensemble de la dbase_APC ne comportant plus que des iTec aux rendements unitaires ajustés RUN conduisant à la conservation de la matière organique du sol MOS du fait du criblage de dbase_APC de manière à retenir que les itinéraires techniques durables au sens entendus dans BMK_EP4101280 aux alinéas [0018] à [0023] contient maintenant à titre de variables AGRO de valeurs de dPK et des teneurs telluriques en P & K (tPK) au niveau de la parcelle et qu'il n'est plus nécessaire de recours à la prédiction de rRSQ et/ou l'ajustement par un indice iSQ de productivité du sol puisque dbase_AgonNum a déjà servie à l'élaboration des courbes de réponse à l'azote fertilisant CRP au sens de CRP_EP4252516 alinéas [0020] à [00030] et notamment de [0028] à [0030]. Cette procédure est parfaitement décrite dans dans BMK_EP4101280 aux alinéas [0018] à [0023] et la revendication numéro 2 et résulte une sélection des pratiques culturales, des rendements cibles et des recommandations d'engrais azotés foncièrement durables.

Ces variables AGRO dPK, tPK à titre de cPK et pHe prédites par AIA calibrée selon dbase_AgroNum - sous-ensemble de dbase_APC [Figure 2], sont maintenant placées dans la partie gauche LHS de la dbase_AgroNum tabulaire. Pour le reste, ce type de prédictions par AIA est connue de la personne du métier (cf. https://www.ibm.com/fr-fr/think/to-pics/predictive-ai ; Breiman 1996a, 1996b et 2001, Freund & Schapire 1999, Friedman 2001, Elith et al. 2008; Kuhn 2008, Dise *et al.* 2009, Nolan *et al.* 2012 & 2018, Mccaffrey *et al.* 2013, Nolan et al. 2015, Ballabio et al. 2016 & 2017, Jeong *et al.* 2016)

L'extension géographique de ces prédictions des variables AGRO - soit ici dPK, cPK via tPK, et pHe, à l'ensemble des parcelles agricoles de la SAU - soit avantageusement ici à travers l'Europe y compris le Royaume-Uni et la Turquie, en veillant à ce qu'il y ait plusieurs et préférablement au moins huit (8) observations d'itinéraires techniques iTec par unité cartographiques pour établir une relation cPK :: dPK et donc implicite cPK :: TUN et pHe :: TUN statistiquement significative (Eurostat ; https://ec.europa.eu/eurostat/web/gisco/geodata/statistical-units/territorial-units-statistics). Plus de 43 000 de ces prédictions on été réalisées à travers l'Europe (Figure 6). Le nombre d'unités cartographiques locales NUTS2 au sein de l'UE - soit près de 400, il faille entrevoir réaliser de 4 à 5 000 ce prédictions, voire 10 fois plus si on utiliser comme unité cartographique locale plus petite, par exemple de type NUTS3.

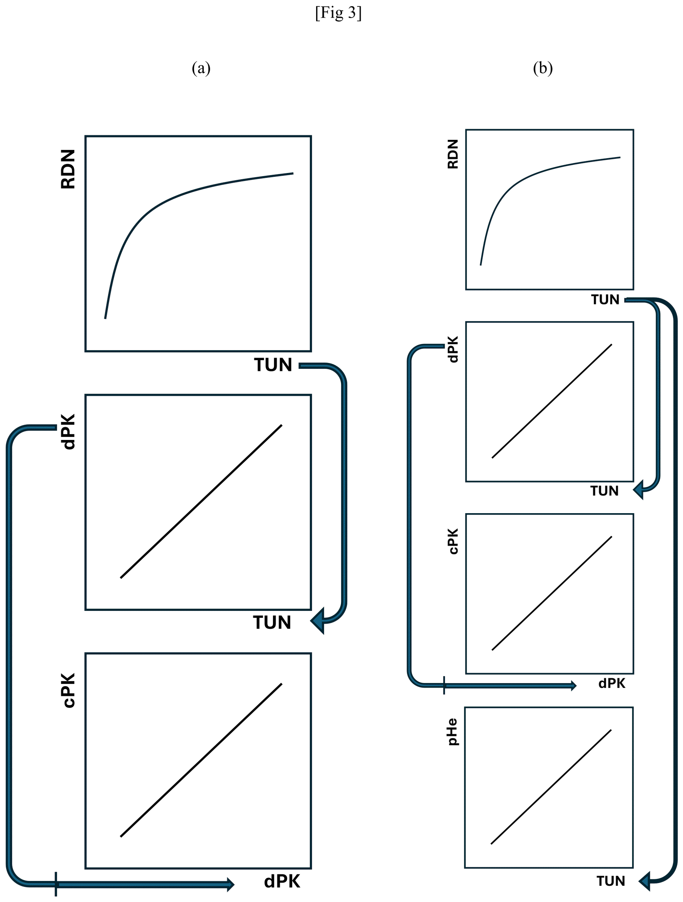

L'établissement desdites relations [dPK :: TUN], [cPK :: dPK] et [pHe :: TUN] [Figure 3]ce fait cette maintenant à l'aide de modèles de type linéaires de type glm, ou multilinéaires s'il faut plus de précision, comportant au moins les coordonnées latitude & longitude centroïdes les plus au centre de la parcelle, un quelconque indice de productivité de la parcelle - avantageusement et à titre d'exemple iSQ (alias « sqicrop » ; Toth et al. 2013_bis), ou encore une certaine valeur de la teneur en argile de la parcelle de manière à ce que pour chaque unité cartographique locale ces valeurs de TUN (dN), dPK, cPK et pH puissent facilement être mises en relation.

De manière à être acceptables aux utilisateurs de plan prévisionnels de fertilisation PPF plus conventionnels et actuellement reconnus à travers l'Europe il faut contraindre ces recommandations doses d'engrais dPK, seuils critique cPK et pH telluriques éventuels pHe de manière à ce qu'ils soient commensurables avec les références habituelles selon l'état de la technique. L'invention permet donc d'obtenir des plan prévisionnels de fertilisation aussi efficace qu'avant mais beaucoup plus simplement et à des coûts marginaux très faibles puisqu'il n'est plus nécessaire d'échantillonner la parcelle agricole et/ou de recourir aux courbes de réponse PK dites *mitscherlichiennes.*

De manière à être commensurables avec des seuils reconnus à travers l'Europe il faut contraindre ces doses d'engrais dPK, seuils critique cPK et pHe telluriques éventuels durables de manière à ce qu'ils soient commensurables avec les références habituelles selon l'état de la technique. Notons que les pHe - eau ou CaCl₂, sont commensurables à ceux proposés par le conseil agricole via analyse de terre et/ou de base de données reconnues, les rendements phosphoriques RDP & RDK sont commensurables aux doses dPK recommandées par le PPF afin d'assurer le remplacement durable des éléments exportés, et les seuils cPK sont, eux, commensurables aux disponibilités - alias fournitures du sol en de P et K telluriques (*available_PK,* angl.) avantageusement à et à titre d'exemple pour ce qui est du P tellurique proposées Ballabio et al. 2019.

Il est aussi utile de savoir que ;
- les seuils cP conventionnels peuvent sont établit à l'aide d'une régression linéaire multivariable comprenant les teneurs en argiles, le pH du sol, ainsi que la pluviométrie, avantageusement selon une équation de type ***cP = a** - **b x argile** - **c x pH** - **d x pluviométrie*** sachant que ces cP conventionnels sont exprimés en P_Olsen (mg_P/kg_sol) et que les coefficients **a** de la susdite équation sont de 40 à 60 et avantageusement de 51.5, **b** entre 0.008 et 0.012 et avantageusement de 0.011 g/kg, **c** entre 4 et 5 et avantageusement de 4.3, et enfin **d** entre 0.006 et 0.010 et avantageusement de 0.008 mm/année,
- et en ce que les seuils cK conventionnels à titre de références sont établit empiriquement à l'aide d'une simple régression linéaire, voire multilinéaire, comprenant ad minima une la capacité d'échange cationique CEC du sol selon une équation à titre d'exemple du type ***cK*** = **75 + *a x CEC*** , sachant que la valeur du coefficient **a** de ce équation et de 2 à 3 et avantageusement de 2.5.

Pour les cP, ce paramétrage provient initialement de Recena et al. 2022. Les précipitations sont obtenues pour chaque parcelle sur une période de 5 à 20 ans selon leurs disponibilités.

Ici et à titre d'exemple, les doses d'engrais dPK sont exprimées en kg-P₂O₅/ha/an et en kg-K₂O/ha/an, respectivement, et le P tellurique phyto-disponible en mg-P_{Olsen}/kg de sol et en K en mg-K_NH_{4-acétate}/kg de sol. Les teneurs de phosphore P tellurique phyto-disponible (mg-P/kg-sol) sont avantageusement obtenues selon Olsen et al. 1954 (ISO 11263-1994) et celles du potassium K tellurique dit « échangeable » selon la méthode de l'acétate d'ammonium (AFNOR NF X31-108) voire telles que référencées par Comifer 2017 et Toth et al. 2013.

Les susdites contraintes par rapport aux doses dPK recommandée, pH telluriques de références, et seuils critiques cPK communément utilisés à travers l'Europe sont exprimées formellement, et par exemple ici à titre d'exemple non limitatif en langage R^{®}, comme suit ;

| | |
|---|---|
| abs(1-pHwater/esdac_pHwater) | <= 0.10, soit de 0.05 à 0.12 |
| abs(1-pHcacl2/esdac_pHcacl2) | <= 0.10, soit de 0.05 à 0.12 |
| abs(1-RDP2O5/dP2O5) | <= 0.10, soit de 0.05 à 0.12 |
| abs(1-RDK2O/dK2O) | <= 0.10, soit de 0.05 à 0.12 |
| abs(1-(available_P/(cP*2*bd))) | <= 0.20, soit de 0.15 à 0.25 |
| abs(1-(available_K/(cK*2*bd))) | <= 0.20, soit de 0.15 à 0.25 |
| abs(1-cP/europe_cP) | <= 0.33, soit de 0.25 à 0.50 |
| abs(1-cK/europe_cK) | <= 0.50, soit de 0.33 à 0.67 |

Enfin, notons que l'interopérabilité avec l'agriculture de précision AP est effectuée à l'aide d'une technologie d'agriculture de précision via une interface numérique consistant en une courbe de réponse à l'engrais azoté TUN agissant dans un premier temps comme une interface informationnelle, et dans une seconde étape opérationnelle, l'utilisateur obtenant d'abord les estimations dNPKH, puis intégrant en relayant ces informations, numériquement ou analogiquement, auxdites technologies d'agriculture de précision afin de former, dispenser en vrais, et appliquer au champ ces doses d'engrais dNPKH sur le terrain, et ce - là encore, via toute technologie de communication, à savoir les réseaux cellulaires, le WiFi, les cartes mémoire, les clouds, les clés USB, le téléphone ou la télécopie, ou même par de simples activations manuelles, vocales ou écrites si nécessaire. L'acceptabilité de ces PPF est donc facilitée par la commensurabilité des cPK et ceux actuellement reconnus en France (Comifer 2019) et en Europe (Recena et al. 2022, Siatwiinda et al. 2024).

### Mode préféré de réalisation

[Figure 2] La réalisation de l'invention ce fait en trois temps. Dans un premier temps, la dbase_APC au sens d'EP3821688 est criblée - réduite, en sorte - par l'élimination réitérative des itinéraire technique iTec donnant des RUN conduisant à une dégradation de la MOS. Cette base de données comprend entre autres des (i) unités cartographiques locales ou régionales avec rendements azotés, (ii) valeurs géoréférencées de teneurs en phosphore & potassium tellurique disponibles, et (iii) taux d'application d'engrais NPK pour différentes grandes culture à graines non-*Fabaceae.* Dans un deuxième temps, le sous-ensemble résultant - la dbase_AgroNum tabulaire elle aussi et toujours formatée tel que proposé à la Figure 2, va calibrer l'algorithme d'IA_catboost prédisant au niveau de la parcelle non seulement RDN/TUN via rRSQ (CRP_EP4252516) mais aussi dPK, cPK et pHe. Ces prédictions peuvent, dans une troisième temps être mises en relation comme proposé à la [Figure 3].

[Figure 3] (a) L'invention redéfinit les notions de teneurs telluriques tPK à titre de seuils cPK fonction du rendement, de ce son taux de fertilisation N TUN correspondant voire ici des doses dPK préconisées elles même fonction de TUN. tPK à titre de seuils critiques cPK ne sont donc plus fonction des problématiques courbes de réponses mitscherlichiennes mais bien, elles aussi tout comme dPK, de l'objectif de rendement RDN durable établit selon CRP_EP4252516. Notons qu'il est tout aussi loisible d'établir et utiliser des fonctions [dPK :: RDN], [cPK :: TUN] puisque que RDN et TUN sont ici intimement liés. Au choix. (b) S'ajoute à ce nouveau paradigme celui de pH tellurique à titre de pHe éventuel atteint de facto lorsque l'objectif de rendement RDN durable au sens de CRP_EP4252516 est atteint. pHe est donc lui aussi fonction de TUN et sera attient peu importe, sans chaulage ou amendements. *pH éventuel* (pHe) est atteint lorsque les doses d'engrais N, P et K sont appliquées durablement au profit d'une conservation de la matière organique du sol MOS. Notons encore une qu'il est tout aussi loisible d'établir et utiliser de la sorte des fonction [pHe :: RDN], voire plus exceptionnellement [pHe :: dPK]. Au choix.

Ces relations [dPK ::TUN], [cPK ::dPK] et [pHe ::TUN] sont des régressions simples ou multivariées-de dPK sur TUN, cPK sur dPK et pHe sur TUN, respectivement, établies au niveau de l'unité cartographique où ce situe la parcelle. Rappelons encore une fois que la courbe de réponse CRP de RDN à N-fertilisant est établit par intelligence artificielle AIA conformément aux procédés décrits dans EP3821688, EP4101280, EP4252516 et EP4491001 comprenant procédés et data agro - pédoclimatique APC suivants ;
i. des données agronomiques constituées du rendement en grains RDT, du rendement azoté RDN et du rendement unitaire RUN soit RDN par unité d'engrais azoté, ces données provenant avantageusement d'Eurostat et des bases de données nationales lorsqu'elles sont disponibles, soit au niveau de la parcelle, de la localité ou de la région ;
ii. des données sur la couche arable du sol provenant avantageusement et à titre d'exemple de l'ESDAC (Panagos et al., 2012, 2022 ; https://esdac.irc.ec.europa.eu/), ainsi que les données météorologiques et climatiques provenant de diverses sources, en particulier et à titre d'exemple GES DISC Earthdata de la NASA (https://disc.gsfc.nasa.gov/).
iii. des modèles d'IA et les méta-modèles qui en résultent pour générer les valeurs de RDN et TUN, dPK et cPK spécifiques aux coordonnées GPS latitude-longitude les plus au centre de la parcelle, algorithmes décrits dans EP4252516 et EP3821688 impliquant une forme d'apprentissage automatique pour la régression, classification et la - surtout, la prédiction via l'optimisation d'une fonction de perte (*loss function,* angl.) dérivable,
iv. et enfin la réitérations proposé en EP4101280 pour calibrer ce modèle prédisant un rendement unitaire de l'azote fertilisant RUN ni trop élevée ni trop faible (BMK_EP4101280, CRP_EP4252516) conduisant à une conservation de la matière organique du sol MOS.

In fine, cela a pour effet de transformer les teneurs PK telluriques tPK en seuils critique cPK. En effet, la dbase_AgroNum va maintenant permettre de calibrer ce même algorithme AIA - avantageusement ici de type catboost, pour la prédiction de dPK, cPK et pHe. Notons aussi qu'il est évident que l'IA au sens de Breimen et al. 2001 est le mode réalisation préférable. Ce type d'algorithmes - abondamment utilisés sans SQT_EP3821688, BMK_EP4101280, CRP_EP4252516 et AZG_EP4491001 est seul capable de valoriser une tel vaste ensemble de data APC inévitablement piètres prédicteurs (*weak classifiers*) individuellement mais néanmoins collectivement capables de calibrer très précisément de tels algorithmes foncièrement plus prédictifs qu'explicatifs.

Prédire dPK, et cPK de tPK implique donc ici la mise en relation de LHS de la dbase par rapport à un ensemble de classificateurs faibles est connue de la personne du métier. Il s'agit de prédire - et non d'expliquer, la variables AGRO en question soit ici dPK et cPK. Rappelons que dans le cadre de la présente invention il est avantageux de procéder comme suit ;
***a) construction de la*** ***dbase**,* avantageusement selon SQT_EP3821688 aux alinéas [0052] à [0056]. La dbase_APC comportant les data AGRO, PEDO et CLIM est extraite de la base de connaissance contenant les data AGRO rendement en grains (RDT) et en protéines (RDN) et RDN par unité d'engrais azoté (RUN) et compilée à l'aide de modules raster et/ou vecteur, ainsi que des variables pédoclimatiques PEDO & CLIM, pertinent et informatives sans être forcément bien corrélées avec les variables AGRO. Tout cela en prenant soins que ces data APC soient géoréférencés GPS latitudes & longitudes les plus au centre de parcelle. Les données pédoclimatiques PEDO & CLIM peuvent, elles, être télédétectées ou obtenues à l'aide de fonctions de pédo-transfert. De telles data géoréférencées proviennent de diverses dbase numériques nationales & internationales et sont généralement *extractibles* (sic) en raster au niveau de la parcelle, bien que certaines soient aussi délimitées par des shapefile (ESDB ; https://es-dac.jrc.ec.europa.eu/resource-type/european-soil-database-soil-properties ou encore les unités cartographiques NUTS pour l'Europe (https://ec.europa.eu/eurostat/fr/web/nuts/background).
***b) criblage de cette dbase*** pour retenir que les itinéraires techniques iTec durables au sens de BMK_EP4101280 aux alinéas [0018] à [0023]. Cependant, ici ce sont les variables AGRO dPK et accessoirement tPK à titre de cPK plutôt que rRSQ qu'il faut prédire. Il n'est donc plus nécessaire ici d'ajuster ces valeurs par un quelconque indice iSQ de productivité du sol comme ce fut le cas avec rRSQ. De plus, il n'est pas nécessaire de recribler dbase_AgroNum est essentiellement la même à titre de sous-ensemble de dbase_APC [Figure 2] ayant déjà servit à l'élaboration des courbes CRP de réponse et ne comportant que les data APC des itinéraires technique durables conduisant à la conservation de la MOS. Cette procédure de criblage est parfaitement décrite dans BMK_EP4101280 aux alinéas [0018] à [0023] et la revendication numéro 2.
***c) prédiction de la variable AGRO d'intérêt,*** soit ici dPK, tPK à titre de cPK et pHe au lieu des habituelles valeurs de rRSQ & RUN (EP4252516), par AIA calibré selon un sous ensemble dbase_AgroNum de la dbase_APC initiale [Figure 2] ne comportant que ces itinéraires technique iTec durables. dbase_AgroNum calibre l'algorithme d'AIA - avantageusement de type catboost (Prokhorenkova et al. 2019 ; https://catboost.ai/), et prédit ces variables AGRO que sont maintenant dPK, tPK à titre de cPK et pHe placées dans la partie gauche (LHS) de dbase_AgroNum tabulaire [Figure 1] ; ce type de prédictions par AIA prédictive est connue (https://www.ibm.com/fr-fr/think/topics/predictive-ai ; (Breiman, 1996a, 1996b & 2001, Freund & Schapire 1999, Friedman 2001, Elith et al. 2008; Kuhn 2008; Dise *et al.* 2009; Nolan *et al.* 2012, 2015 & 2018, Mccaffrey *et al.* 2013, Ballabio et al. 2016 & 2017, Jeong *et al.,* 2016).
***d) établissement desdites relations cPK :: dPK :: pHe :: TUN*** à l'aide de modèles linéaires ou multilinéaire comportant ad minima les coordonnées GPS latitude & longitude les plus au centre de la parcelle, un quelconque indice de productivité de la parcelle - iSQ (Toth et al. 2013_bis) par exemple, l'unité cartographique, et avantageusement un estimé quelconque de la teneur en argile du sol. Pour chaque unité cartographique, l'ensemble des valeurs de TUN (dN), dPK, tPK à titre de cPK et pH à titre de pHe sont ainsi mises en relation paramétrant du coup lesdites susdites régressions (multi)linéaires glm. Si les coefficient de détermination R² de ces régressions glm sont inférieures à 80%, mieux vaut modifier les modifier en ajoutant des variables pédologiques. Ce faisant on met en relation des data_APC préalablement générés au niveau de la parcelle par intelligence artificielle AIA d'une dbase_AgroNum sous-ensemble d'une dbase_APC obtenue, elle, par intelligence artificielle collective CAIAC avantageusement selon EP4252516. On utilise ici par exemple la fonction *lm* en R^{®} [Tableau 1] ainsi qu'un minimum de variables précises ou perfectibles, en l'occurrence l'unité cartographique NUTS(2), les coordonnées GPS latitude et longitude (WGS84) - centroïde géométrique de la parcelle, et la teneur en argile (*clay* ; Ballabio et al. 2016) ;

**[Tableau 1] Formalisation des modèle de type glm multivariés pour la mise en relation avec dN (TUN) des valeurs dPK, cPK et pHe prédites par IA _catboost**

| | | |
|---|---|---|
| **Taux de fertilisation dP en fonction du taux de fertilisation N (TUN) - [dP :: dN]** | | |
| | > glm_PN <- summary(Im(tpk_P ~ NUTS2 + lat + Ion + clay + dN)) | |
| **Seuil critique cP en fonction du taux de fertilisation dP - ]cP :: dP** | | |
| | > glm_PP <- summary(Im(soil_P - NUTS2 + lat + Ion + clay + dP)) | |
| **Taux de fertilisation dK en fonction du taux de fertilisation N (TUN)- [dK :: dN]** | | |
| | > glm_KN <- summary(Im(tpk_K - NUTS2 + lat + Ion + clay + dN)) | |
| **Seuil critique cK en fonction du taux de fertilisation dK - [cK :: dK]** | | |
| | > glm_KK <- summary(Im(soil_K - NUTS2 + lat + Ion + clay + dK)) | |
| **SAB pHe_eau du sol fonction du taux de fertilisation N (TUN) - [pHe_eau :: dN]** | | |
| | > glm_pHwaterN <- summary(Im(pHwater ~ NUTS2 + lat + Ion + clay + dN)) | |
| **SAB pHe_CaCl₂ du sol fonction du taux de fertilisation N (TUN) - [phe_kcl :: dN]** | | |
| | > glm_pHcacl2N <- summary(Im(pHcacl2 - NUTS2 + lat + Ion + clay + dN)) | |

***e) extension de ces prédictions de la variable AGRO*** d'intérêt à l'ensemble des parcelles agricoles de la SAU d'intérêt en veillant à ce qu'il y ait plusieurs et préférablement au moins huit (8) observations d'itinéraires techniques par unité cartographiques pour établir une relation [cPK :: dPK] et donc implicite [cPK :: TUN] statistiquement significative. Le nombre d'unité cartographique NUTS2 étant près de 400, il faut entrevoir réaliser de 4 à 5 000 ce prédictions, voire 10 fois plus si on utiliser comme unité cartographique locale NUTS3 (Eurostat ; https://ec.europa.eu/eurostat/). A ce jour, plus de 43 000 de ces prédictions ont été réalisées à travers toute la SAU de l'UE [Figure 6] (infra).

L'acceptabilité de l'invention suppose une commensurabilité avec les notions conventionnelles de coefficients apparents d'utilisation (*use efficiency*) et de seuils critiques (*critical thresholds*). Les doses et seuils dPK & cPK sont donc établis de manière à être commensurables avec des seuils reconnus à travers l'Europe, par exemple selon Recena et al. 2022 pour le P. Cette contrainte qu'est la commensurabilité fait office de validation puisque l'invention permet d'obtenir des plan prévisionnels de fertilisation tout aussi efficace qu'avant mais maintenant beaucoup plus simplement et à des coûts marginaux très faibles puisqu'il n'est plus nécessaire d'échantillonner la parcelle agricole et/ou de recourir aux courbes de réponse PK dite *mitscherlichiennes* (sic).

Un peu arbitrairement, ces contraintes par rapport aux seuils critiques communément utilisés à travers l'Europe respectent avantageusement les écarts suivants [Tableau 2] ;

| | |
|---|---|
| **abs(1-pHwater/esdac_pHwater)** | **<= 0.10** |
| **abs(1-pHcacl2/esdac_pHcacl2)** | **<= 0.10** |
| **abs(1-RDP2O5/dP2O5)** | **<= 0.10** |
| **abs(1-RDK2O/dK2O)** | **<= 0.10** |
| **abs(1-(available_P/(cP*2*bd)))** | **<= 0.20** |
| **abs(1-(available_K/(cK*2*bd)))** | **<= 0.20** |
| **abs(1-cP/europe_cP)** | <= **0.33** |
| **abs(1-cK/europe_cK)** | <= **0.50** |

Explicitement. Les pH telluriques, eau ou CaCl₂, prédits doivent être à +/- 10% de ceux proposés à titre de références par le conseil agricole, analyse de terre et/ou via une dbase de type Ballabio et al. 2019. Les rendement RDP et RDK doivent eux être à +/- 10% des dose dPK afin d'assurer le remplacement durables des éléments exportés, pratique courante en agriculture durable. Afin de faciliter l'acceptation de l'invention il est aussi avantageux que les seuils cPK prédits par les susdites fonctions glm (supra) soient, elles, à +/- 20% des disponibilité de P et K telluriques. Enfin, les seuils cPK proposés par la présente invention devraient néanmoins être commensurable à +/-33% pour le P et +/-50% pour le K.

Les seuils cP estimés sont établit empiriquement à l'aide d'une simple régression linéaire multivariable comprenant ad minima les teneurs en argiles, le pH du sol, ainsi que la pluviométrie, avantageusement selon une équation de type ; ***cP** = **a - b x argile - c x pH-d x pluviométrie.*** Les cP sont, eux, exprimés en P_Olsen (mg_P/kg_sol), et les coefficients a situés de 40 à 60 et avantageusement de 51.5, b entre 0.008 et 0.012 et avantageusement de 0.011 g/kg, c entre 4 et 5 et avantageusement de 4.3, et enfin d entre 0.006 et 0.010 et avantageusement de 0.008 mm/année, ces paramètres provenant avantageusement et par exemple de Recena et al. 2022. Les précipitations moyennes sont obtenues pour chaque parcelle sur une période de 5 à 20 ans. Cette méthode, bien connue des professionnels, utilise souvent des fonctions en Python ou R. Une fois extraites, ces moyennes environnementales peuvent être utilisées pour calculer les seuils critiques PK selon Recena et al. 2022. Enfin, les seuils cK_estimés sont établit empiriquement à l'aide d'une simple régression linéaire, voire multilinéaire, comprenant ad minima une la capacité d'échange cationique CEC du sol selon une équation du type ; ***cK* = 75** + ***a x CEC.***

### Exemples d'application et conseil agricole

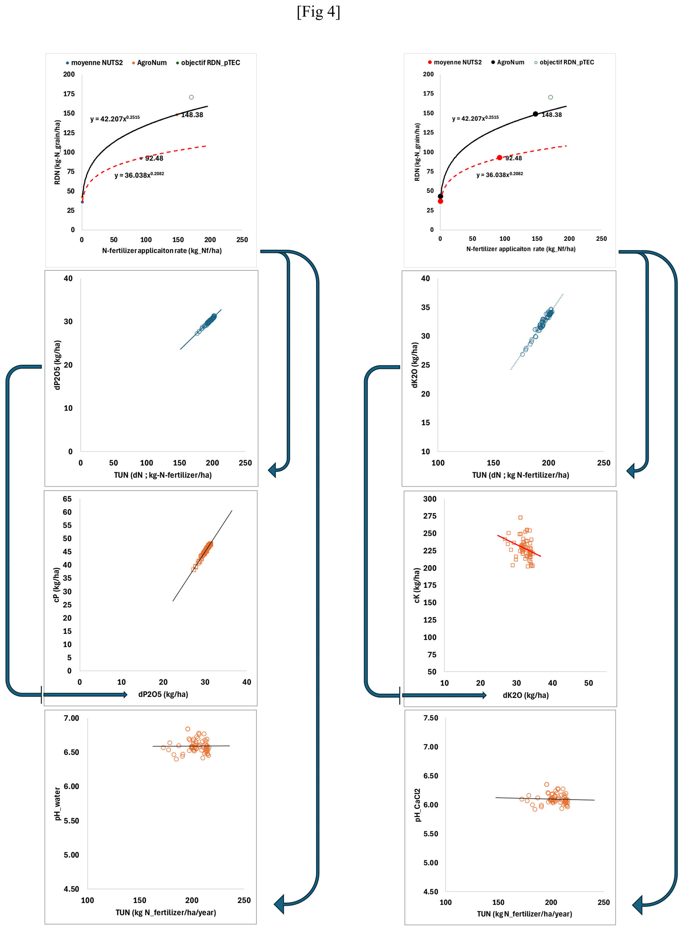

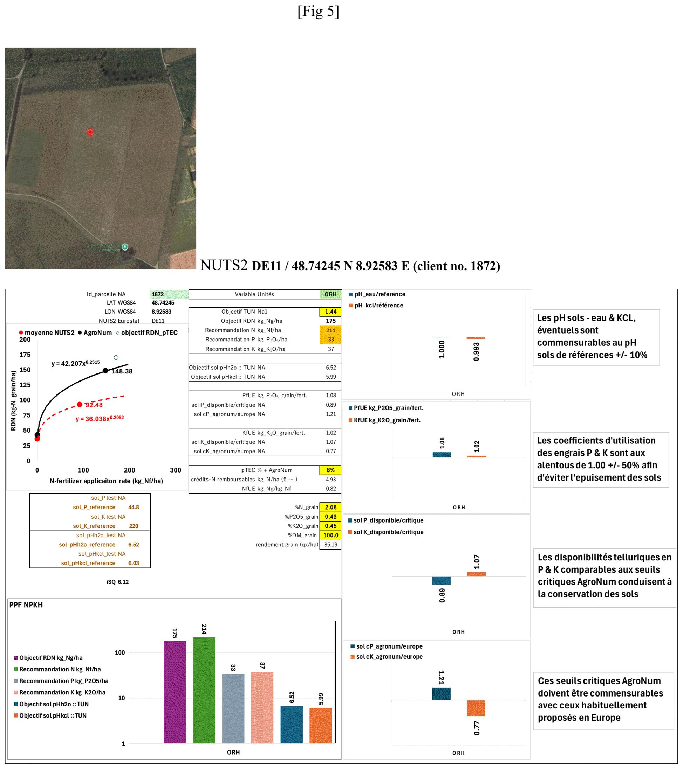

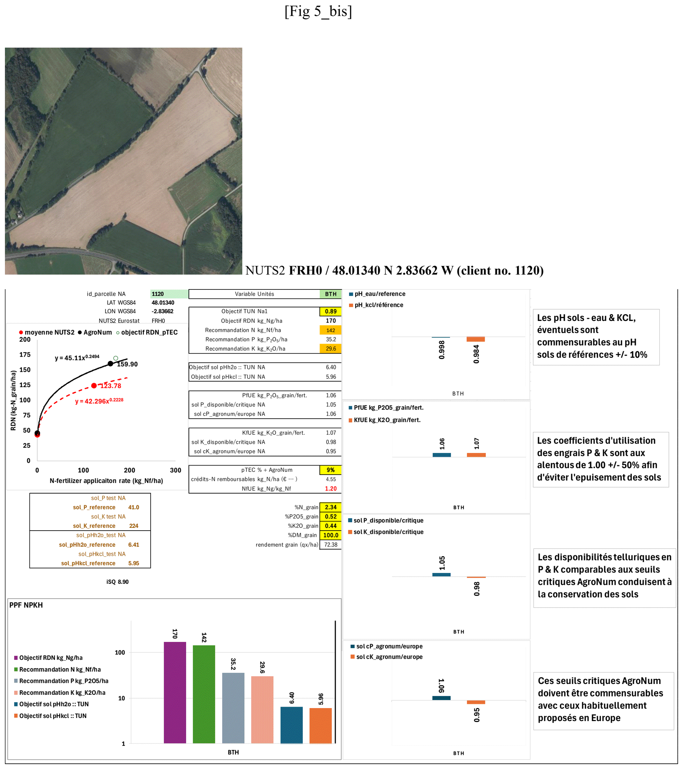

[Figure 4] Un exemple de la réalisation de l'invention - réalisée à ce jour plus de 43 000 fois à travers l'Europe !, schématisée à la [Figure 3] pour une parcelle d'orge d'hiver ORH (client no. 1872) située dans l'unité cartographique NUTS2 DE11 dont l'image et les coordonnées GPS et le plan *prévisionnel de fertilisation* PPF sont indiqués à la [Figure 5]. Il s'agit de représentations 2D des relations dPK, cPK et pHe glm multivariées ; leurs précisions apparentes - assez bonnes, sont donc inférieures à celle des glm multivariées [Tableau 1] et ne sert ici qu'à illustrer la réalisation de l'invention schématisée aux [Figure 2] et [Figure 3]. Chaque point représente une parcelle au sein de l'unité cartographique. Nécessairement, plus il y a de parcelles et d'itinéraires techniques iTec par unité cartographique, plus ces courbes de réponses seront précises et justes. Les graphes à la gauche illustrent les relations [dP :: TUN], [cP :: dP] et [pHe_eau :: TUN] ; celles à droit [dK :: TUN], [cK :: dK] et [pHe_CaCl₂ :: TUN]. L'habituelle courbe de réponse CRP (EP4252516) est placée au-dessus de ces fonctions PKH empirique par cohérence avec la [Figure 3]. Voire à la [Figure 5] les détails du plan prévisionnel de fertilisation PPF intégrant cette réalisation de l'invention.

[Figure 5] Un PPF intégrant les préconisations provenant ces courbes de réponses dPK, cPK et pHe fonction du taux de fertilisation N, P & K pour une parcelle de blé tendre d'hiver BTH (client no. 1824 ; 48.74245 N 8.92583 E) au sein d'une unité cartographique (NUTS2 DE11 ; Allemagne). A la droite figure les contraintes [Tableau 2] assurant la commensurabilité et l'acceptabilité des recommandations (échelle logarithmique). Les teneurs (%) N, P et K des grains et leur teneur en matière sèche (%DM, *dry matter*) feront l'objet d'ajustement à titre de conseil agronomique si la récolte n'est pas conforme au PPF. L'agriculteur peut aussi ajuster l'objectif de rendement par rapport à « Na1 » (ici fixé à 1.44), sachant que ***Na1*** est le *point de bascule* lorsque le rendement protéique RDN ≡ taux de fertilisation azotée TUN ; ce concept est explicité en AZG_EP4491001 aux tableaux 1 & 5).

Il est aussi possible d'escompter un certain *progrès technique* pTEC par rapport à la courbe de réponse CRP *et* la moyenne environnementale attribuable à la modification du précédent itinéraire technique iTec ; cet notion de pTEC est elle aussi explicitée en AZG_EP4491001. Ici par exemple, pTEC est escompté à environ 8% et générait 4.93 *crédits azote remboursables* suite à une intensification durable au-delà de la courbe de réponse des rendements CRP. pTEC ne fait donc pas nécessairement partie intégrante de la présente invention mais peut être avantageusement ajouter au PPF ; voir AZG_EP4491001).

Les disponibilités telluriques PK sont indiquées à titre de références et de contraintes. Idem pour les pH du sol - eau & KCl, provenant d'analyses de terre et/ou de dbase (Ballabio et al. 2019). Connaissant les coordonnées GPS au centre de la parcelle, l'unité cartographique - NUTS2 par exemple, ainsi qu'une quelconque variable pédologique bien connue et stationnaire tel que la teneur en argile par exemple, on peu ains mettre en relation dPK, cPK, pHe selon l'objectif de rendement RDN et son taux de fertilisation TUN durable correspondant.

[Figure 5_bis] Une deuxième exemple d'un PPF intégrant encore une fois les préconisation des courbes de réponses [dPK ::TUN], [cPK ::dPK], et [pHe ::TUN] mais ici pour une parcelle en France (NUTS2 FRH0, 48.0134 N -2.8366 E). La même type d'analyse de conseil prévaut sauf qu'ici la dose TUN prescrite est n'est que de 0.89 x Na1 = 142 pour un pTEC d'environ 9% et un objectif de RDN de 170. Notons que RDN > TUN d'où un NfUE (run supérieur à 1 (1.20) sans que la durabilité de l'iTec soit remise en question du fait de l'épuisement du la MOS (*soil mining,* angl.). Comme pour la parcelle précédente [Figure 5], la moyenne RDN NUTS2 est inférieure à celle de la courbe de réponse CRP, ce qui est le cas dans plus de 70% ; il y a donc un potentiel d'augmentation des rendements RDT et RDN par voie d'intensification durable des pratiques culturale. Cette intensification est parfaitement en accord avec le constat de Schils et al. 2018. A ce stade de développement de l'invention, ce type de PPF a été réalisée pour 43 391 parcelles travers l'Europe [Figure 6].

[Figure 6] Cartographie de l'extension géographique pan-européenne de l'ensembles de 43 392 PPF_PKH réalisés à ce jour. L'invention dite PKH permet un conseil agronomique en fertilisation NPK et la gestion dynamique du pH tellurique éventuel. Le tout sans prélèvements d'échantillons de sols et/ou de chaulage de la parcelle.

La réalisation de l'invention est comparable et la continuation en sorte de CRP_EP4252516 à l'exception plus que notable qu'au lien de prédire rRSQ à la gauche (LHS) de la base de données dbase tabulaire il faut ici prédire les teneurs P et K des sols à titre de cPK en remplaçant à la gauche du tableau rRSQ par les valeurs P & K telluriques disponibles. En effet, les courbes de réponse AgroNum^{™} selon EP4252516 peuvent maintenant être utilisées pour recommander des taux de fertilisation P & K durables. Étant dérivées à l'aide essentiellement du même algorithme d'IA calibré, ces recommandations seront nécessairement synonymes - ou du moins tout aussi propices à la conservation de la matière organique du sol. Rappelons qu'il s'agit de la principale différence entre les PPF AgroNum et les PPF conventionnels basés sur l'équilibrage et la budgétisation des stocks et des flux de N, P et K du sol. Le calibrage de l'algorithme AgroNum à l'aide d'une simple heuristique éliminant de la base de données les NUE trop élevés ou trop faibles permet de conserver le carbone organique deu sol. Cette heuristique s'applique maintenant non seulement à l'azote, mais aussi aux régimes P & K. De plus en fonction des taux de fertilisation par l'azote TUN est profondément innovant car il pourrait éventuellement rendre bien moins impératif le chaulage.

[Figure 7] L'interaction numérique (digitale), voire analogique, entre l'utilisateur et la base de données APC est réalisée par interopérabilité d'une certain intelligence artificielle AIA et une certaine technologie d'agriculture de précision AP et/ou de fertilisation raisonnée FR via l'interface CRP (EP4252516) constitué d'une courbe de réponse à l'azote fertilisant TUN agissant dans un premier temps entant qu'interface informationnel (Figure 4_haut), et dans un deuxième temps opérationnel, l'utilisateur obtenant dans un premier temps les estimés dPK selon l'un ou l'autre des schémas (a) et (b) à la Figure 3 et par après intégrant relayant ces informations, digitalement ou analogiquement, auxdites technologies d'agriculture de précision AP et/ou de fertilisation raisonnée. Cela de manière à permettre la formation, la dispense et l'application au champs de ces doses d'engrais dPK, et cela - encore une fois, via une quelconque technologie de communication, à savoir des réseaux cellulaires, wifi, des cartes mémoires, clouds (angl.), clefs USB insérables, ou encore plus par téléphone ou facsimilée, ou même par simple activations manuelle, vocale ou écrite s'il le fallait. L'invention permet cette meilleure interaction - interopérabilité, entre les bases de données et l'utilisateur, agriculteur/trice ou le conseil agricole. L'agriculteur-utilisateur n'interagi pas directement avec la base de donnée ou l'AIA ce qui ce traduit par une plus grande ergonomie.

L'invention fait donc partie intégrante de la fertilisation raisonnée pour le pilotage intra-parcellaire et intra-saisonnier de la fertilisation azotée TUN. En ce sens, l'invention s'inscrit parfaitement dans le contexte de la fertilisation raisonnée et notamment le projet européen **Nutri-Check Net^{®}** (https://platform.nutri-checknet.eu/about) qui propose une approche en trois temp ; i) planification prévisionnelle des doses de fertilisation NPK, ii) suivi et ajustement intra-annuel et -parcellaire dans le cadre d'une agriculture de précision et iii) revue et conseil agronomique post-récolte afin d'améliorer les susdits plans, suive et ajustements lors de la prochaine campagne. La présente invention est surtout applicable directement aux étape i) et iii) et parfaitement interopérable avec l'étape deux et l'ensemble des technologies d'agriculture de précision .

Rappelons les notions de data ***perfectibles*** et ***commensurables*** par oppositions aux data ***précises*** telle que RDT, RDN, TUN intégrées au calcul de rRSQ à savoir et selon CRP_EP4252516 aux alinéas [0020] à [0030]. Par exemple, les données PEDO provenant avantageusement et à titre d'exemple de l'Esdac (Panagos et al., 2012, 2022 ; https://es-dac.irc.ec.europa.eu/), ainsi que les données météorologiques et climatiques de GES DISC NASA (https://disc.gsfc.nasa.gov/) sont commensurables. In contrario, les taux d'application d'engrais NPK selon Mueller et al. 2012, par exemple, sont perfectibles.

Ces PPF_PHK requièrent peu ou pas de prélèvements de sols. Pour le conseil agricole cela accélérera le développement du chiffre d'affaire en réduisant les coûts liés à cet échantillonnage. Les prélèvements de sols seront utilisés pour la R&D, le développement de bases de données et le contrôle de la qualité de leur qualité. A suivre.

### Sigles et définitions

**Parcelle (agricole)** : unité cartographique de taille quelconque qui concerne les cultures ou l'élevage, appelée un champ, soit une surface qui accueille une culture principale - ici le plus souvent une grande culture à graine non-*Fabaceae,* qui la distingue des parcelles voisines.

**Agriculture de précision** : procédé agronomique utilisant des technologies tel que des capteurs, drones & images satellites pour analyser les parcelles, optimiser les rendements et réduire les intrants afin de produire plus avec moins tout en respectant l'environnement.

**Chaulage** : Le chaulage des sols est une technique agricole qui consiste à apporter des amendements calciques ou calco-magnésiens à un sol pour en corriger l'acidité car la trop grande acidité d'un sol l'empêche de libérer ses nutriments pour nourrir les plantes (Wikipédia).

**Fertilisation raisonnée** : La fertilisation raisonnée vise à satisfaire les besoins nutritionnels des plantes en complétant l'offre du sol en éléments minéraux, tout en respectant l'environnement et en étant économiquement rentable, comme le promeut le Comifer (2017, 2019).

**algorithme** : suite d'instructions ou d'étapes logiques conçues pour résoudre un problème ou accomplir une tâche spécifique. Il s'agit d'un processus structuré qui permet d'obtenir un résultat en suivant des règles précises dites heuristiques, ou encore d'une suite fini non-ambiguë d'instruction et d'opération permettant de résoudre un problème adéquatement. Cette suite d'instruction est réitérée jusqu'à épuisement des data ou obtention d'une optimum sous contraintes. Dans la présente invention la règle (heuristique) précise est l'élimination systématique des rendements unitaires de l'engrais azoté RUN jugées trop faible ou élevés pour conduire à la conservation de la matière organique du sol (MOS).

**espace algébrique** (vectorielle) : compositions de vecteurs orthogonaux permettant d'assurer l'indépendance et non-corrélation de ces vecteurs à titre de variables explicatives. Dans la pratique cette orthogonalité n'est plus assurée - loin de là ! lorsque plusieurs variables-vecteurs - généralement au plus de 5 ou 6, sont en jeu limitant ainsi l'application de modèle linéaire algébrique en intelligence artificielle collective impliquant nécessairement un vaste ensemble de classificateurs.

**intelligence artificielle** : algorithmes - et non modèles, réitérant une simple règle heuristique dans un espace non-algébrique tel que défini ici afin d'aboutir à une réponse adéquate voire optimale si une ou des contraintes est appliques systématiquement, avantageusement ici l'élimination progressive du jeux de données initial - la base de données dbase APC, les itinéraires techniques associés à des rendements unitaire de l'azote fertilisant soit trop élevés, soit trop faibles conduisant à une dégradation de la matière organique du sol (MOS). Il s'agit de méthodes mathématiques implémentable par ordinateurs constitués d'algorithmes pouvant être entrainés à prédire très précisément des variables agronomiques AGRO sa pour autant expliquer les mécanismes et interactions expliquant la réalisation de ces variables. Ce compromis prédiction / explication au profit de la première est jugée ici plus qu'acceptable du fait qu'ajouter à la base de connaissance n'est pas l'objet ou le domaine de la présente invention. L'objet et le domaine de la présente invention es le conseil agronomique et non la science agronomique.

**intelligence artificielle collective** (CAIAC) : algorithme d'IA implémentant une interaction réitérative d'un algorithme d'IA préalablement calibré avec un certain jeu de données et des nouvelles données de manière à identifier et retenir *que* les observations proches de ses prédictions, ces dernières étant ajoutées au jeu de données initial avant de recalibrer l'algorithme de nouveau, et ainsi de suite tant qu'il y aura de nouvelle données de disponible. Il va de soi que les nouvelles observations doivent être constituées d'exactement le même type de variables, provenant des même sources et structuré en dbase tabulaire LHS/RHS exactement de la même manière. CAIAC est une en ce sens une application classique d'algorithme d'IA en espace non-algébrique parfaitement connue de l'homme du métier, la seule différence notable ici étant cette sélection parmi de nouvelles observations présentées au modèle pour évaluation réitérative et déjà proposée dans SQT (EP3821688), BMK (EP410120) et CRP (EP4252516).

**heuristique** : critère de décision à titre de règle (*rule of thumb,* angl.), avantageusement binaire, pouvant être simplement applique lors du criblage de la base de données afin d'éliminer les observations et les classificateurs faibles qui leurs sont associés contraire au but recherché, à savoir ici l'agriculture durable par conservation de la matière organique du sol (MOS).

**dbase_APC** : base de données AGRO-PEDO-CLIMatique (APC) comportant des data géoréférencées sur les rendements des grandes cultures, leur taux de fertilisation et teneurs NPK des grains récoltés, la qualité physico-chimique des sols, ainsi que des variables climatiques affectant la météorologie. Cet ensemble décrit donc une série d'itinéraire technique au niveau de la parcelle mais sans pour autant identifier les itinéraire technique iTec durables conduisant à la conservation de la matière organique du sol MOS. Le criblage de dbase_APC sera nécessaire.

**dbase_AgroNum** : base de donnée constitué d'un sous-ensemble de dbase_APC obtenue par criblage en éliminant les itinéraire technique iTec et leurs data APC associés à des rendements unitaire RUN soit trop faibles, soit trop élevés conduisant donc à la dégradation de la matière organique du sol. Ce criblage est amplement décrit dans BMK_410128 aux alinéas [0018] à [0019], aux revendications et aux figure 2 à 9, dans CRP_EP4252516 aux alinéas [0025] à [0027] et aux revendications et aux figures, et aussi dans AZG_EP4491001 aux alinéas [0053] à [0054] et implicitement à l'équation 2 [0053].

**localisation** : limitation d'étendue géographique au sein d'unités cartographiques à l'intérieure des quels les courbes de réponse des seuils critiques cPK à la fertilisation NPK sont les plus explicites au niveau de la parcelle. Dans le cas de la présente invention l'unité cartographe est NUTS (*nomenclature des unités territoriales statistiques*) de niveaux 2, voire avantageusement dans un proche avenir de niveau 3(https://ec.europa.eu/eurostat/).

**R/LHS et classificateurs faibles** (de la base de données dbase) : notion en data science permettant de différencier les data placés à droite (*right-hand side,* RHS) de la dbase tabulaire contenant de l'information à propos de variables à prédire placées à gauche (left-hand side, LHS) sans être nécessairement bien corrélées avec celles-ci ; ces data RHS sont dit **classificateurs faibles.**

**RDT** : rendement grain 100% matière sèche (kg grain/hectare/année) ; terminologie déjà utilisée en EP3821688, EP4101280 et EP4252516 et inchangée.

**RDN :** rendement azoté = RDT x teneur N-grain (kg N_grain/ha/année) ; terminologie utilisée en EP3821688, EP4101280 et EP4252516 et inchangée pour cohérence et continuité.

**RUN,** rendement unitaire de l'azote fertilisant : rendement azoté RDN par unité de fertilisation azotée TUN. Selon EP4252516 ***RUN* = (*run*^2)/(1400 *x TUN*^(-1.5)**), « **run** » étant le rendement unitaire *simple* → RDN/TUN, tandis que **rRSQ** est simplement RUN divisé par une certaines valeur iSQ indiquant le potentiel agronomique de la parcelle

**RUP** (alias PfUE *P-fertilizer use efficiency,* angl.): rendement unitaire du phosphore fertilisant - quantité de phosphore P en équivalents P₂O₅ exportée par le grain récolté **(RDP** ou, plus précisément, RDP₂O₅ - i.e. rendement phosphorique) par rapport à la quantité dP de P équivalents P₂O₅ apportée par l'engrais P RUP sera ici - à titre de contrainte d'optimisation, d'environ 1.00 +/- 10% (Figure 5).

**RUK** (alias KfUE *K-fertilizer use efficiency,* angl.): rendement unitaire du potassium fertilisant - quantité de potassium K en équivalents K₂O exportée par le grain récolté **(RDK** ou, plus précisément, RDK₂O - i.e. rendement potassique) par rapport à la quantité de K équivalents K2O apportée par l'engrais K. KUP sera ici - à titre de contrainte d'optimisation, d'environ 1.00 +/- 10% (Figure 5).

**TUN** (alias dN par analogie à dP et dK) : taux de fertilisation azotée (kg_Nf/ha/année) ; terminologie déjà utilisée en EP3821688, EP4101280 et EP4252516 et inchangée pour cohérence et continuité.

**aN1 et Na1** (*data précises*) : valeurs empiriques spécifiques à la parcelle décrivant respectivement la *racine* de la fonction en puissance AgroNum^{™} lorsque dN (TUN) ≡ 1 et le *point de bascule* sur cette courbe de réponse à dN (TUN) lorsque RDN ≡ TUN au sens d'EP4252516.

**dPK** (data *perfectibles)* : doses hectare d'engrais PK, i.e. taux de fertilisation, ou « doses », d'engrais phosphatés et potassiques, respectivement, dont la teneur P & K phyto-disponibles est connue et comparable voire égale à celle d'engrais minéraux, y compris de synthèse, exprimés le plus souvent en équivalents P₂O₅ et K₂O, respectivement.

**cPK** (data *commensurables*) : seuils dits « critiques » en termes de teneurs en P & K, respectivement, des sols en dessous des quels il n'y a plus de réponse des rendements agronomiques aux engrais P & K et donc risque d'accumulation et de pollution diffuse. cPK sont généralement exprimé en équivalents élémentaires P & K, respectivement, et déterminés par extraction physico-chimique reflétant en principe leurs bio- (phyto-) disponibilité Traditionnellement selon l'état de la technique ces seuils furent établis avec des courbes de réponse *mitscherlichiennes* (sic).

**tPK** : teneurs des sols (telluriques) en phosphore P et potassium K généralement exprimés en mg-PK « bio(phyto)disponible » par kg de sol avantageusement à titre d'exemple selon Olsen et al. 1954 (ISO 11263-1994) pour le P et la méthode de l'acétate d'ammonium (AFNOR NF X31-108). La présente invention va permettre de transformer tPK en cPK, tPK étant donc ainsi le précurseur de cPK.

précision : caractéristique des données placées en LHS de la dbase en ce qu'elles sont dépourvus d'erreur d'échantillonnage, voire obtenus sans échantillonnage, par exemple en récoltant l'intégralité de la récolte utile de la parcelle, en connaissant exactement le nombre d'unités de fertilisants NPK appliqués, ou encore par échantillonnage d'une masse homogène tel que le grain récolté. eg. data AGRO y compris dN (TUN)

**perfectibilité** : caractéristique des données placées en à la gauche (LHS) mais aussi - exceptionnellement dans le cadre de la présente invention à titre de *classificateurs faibles,* à la droite (RHS) des dbase_APC et dbase_AgroNum en ce qu'elles peuvent en principe être mieux renseigner lors du développement technico-commercial de la présente invention auprès des agriculteurs-utilisateurs. Les taux d'application - les doses, d'engrais P et K dPK sont des data perfectibles.

**commensurabilité** : caractéristiques des données placées à la droite (RHS) des dbase_APC et dbase_AgroNum en ce qu'elles seront toujours nécessairement entichées d'erreur d'échantillonnage trop important pour faire l'objet à prédire par AIA ou CAIAC et ne peuvent donc servir que de classificateurs faible ou encore, comme c'est la cas ici, de contraintes utiles pour borner les plans prévisionnels de fertilisation PPF selon le présente invention de manière à les rendre plus acceptable à la personne du métier. Les seuils cPK conventionnels et les pH tellurique de références sont des data commensurables, voire principe l'ensemble des data PEDO et CLIM utilisée comme classificateurs faibles RHS.

**Unité cartographique** : représentation (carto)graphique du territoire, avantageusement numérique en mode raster ou vecteur. Il est ici question de NUTS (*nomenclature des unités territoriales statistiques)* de niveaux 2 ou 3 (NUTS2/3). Ce découpage territorial destiné à faciliter les comparaisons entre pays, ou entre régions, d'un même ensemble (cf. Eurostat 2022 ; https://ec.europa.eu/eurostat/)

### Références & bibliographie

Abiola 2024. Nitrogen uptake dynamics of high and low protein wheat genotypes. Frontiers in Plant Science, 15. Available at: https://doi.org/10.3389/fpls.2024.1493901.
Adrdor 2025. The power of intelligence emerging from swarms," Computer Science, 26(1), pp. 1-24. Available at: https://doi.org/10.7494/CSCI.2025.26.1.6306.
Almaatouq 2022. The distribution of initial estimates moderates the effect of social influence on the wisdom of the crowd. Scientific Reports, 12(1). Available at: https://doi.org/10.1038/s41598-022-20551-7.
Baja, H. et al. (2025) "Adaptive fertilizer management for optimizing nitrogen use efficiency with constrained reinforcement learning," Computers and Electronics in Agriculture, 237. Available at: https://doi.org/10.1016/j.compag.2025.110554.
Ballabio et al. 2019. Mapping LUCAS topsoil chemical properties at European scale using Gaussian process regression. Geoderma 355 (2019) 113912 / https://doi.org/10.1016/j.geoderma.2019.113912 / data - https://esdac.irc.ec.europa.eu/content/chemical-properties-european-scale-based-lucas-topsoil-data
Ballabio et al. 2017. Mapping monthly rainfall erosivity in Europe. Science of the Total Environment, 579, pp. 1298-1315. Available at: https://doi.org/10.1016/j.scitotenv.2016.11.123.
Ballabio et al. 2016. Mapping topsoil physical properties at European scale using the LUCAS database. Geoderma, 261, pp. 110-123. Available at: https://doi.org/10.1016/j.geoderma.2015.07.006. / data - https://esdac.irc.ec.europa.eu/content/topsoil-physical-properties-europe-based-lucas-topsoil-data
Becker et al. 2017 "Network dynamics of social influence in the wisdom of crowds," Proceedings of the National Academy of Sciences of the United States of America, 114(26), pp. E5070-E5076. Available at: https://doi.org/10.1073/pnas.1615978114.
Bolland et al. 1999. Comparing responses of grain legumes, wheat and canola to applications of superphosphate. Nutrient Cycling in Agroecosystems 53: 157-175.
Breiman, L. (1996a) Bagging Predictors. Kluwer Academic Publishers.
Breiman, L. (1996b) heuristics of instability and stabilization in model selection 1, The Annals ofStatistics*.*
Breiman, L. (2001) Statistical Modeling: The Two Cultures, Source: Statistical Science*.*
Centola, D. (2022) "The network science of collective intelligence," Trends in Cognitive Sciences. Elsevier Ltd, pp. 923-941. Available at: https://doi.org/10.1016/j.tics.2022.08.009.
Chmait, N. (2017) Understanding Collective intelligence in Agent-Based Systems: an Information-Theoretic Approach to the Measurement and Comparison of intelligence in Groups*.*
Colomb et al. 2007. Phosphorus management in low input stockless cropping systems: crop and soil responses to contrasting P regimes in a 36-year experiment in southern France. Europ. J. Agron. 26: 154-165
Comifer 2007. Fertilisation PK : grille de calcul de dose. Le groupe PKMg du COMIFER 2007
Comifer 2011. Calcul de la fertilisation azotée Guide méthodologique pour l'établissement des prescriptions locales ; cultures annuelles et prairies Édition 2011. Brochure éditée par le Comifer, Le Diamant A, 92909 Paris La Défense Cedex, ISBN 978-2-910393-09-0
Comifer 2017. Guide de la fertilisation raisonnée. 2ième édition. Eds. France Agricole.
Comifer 2019. La fertilisation P - K - Mg | Les bases du raisonnement | Groupe PKMg | Le Diamant A 92909 Paris La Défense Cedex / ISBN : 978-2-910393-10-6
Cui & Yasseri. (2024) "Al-enhanced collective intelligence," Patterns. Cell Press. Available at: https://doi.org/10.1016/j.patter.2024.101074.
Culman et al. 2023. Probability of crop response to phosphorus and potassium fertilizer: Lessons from 45 years of Ohio trials. Soil Sci. Soc. Am. J. 2023;87:1207-1220.
Delgado et al. (2019) "Emerging nutrient management databases and networks of networks will have broad applicability in future machine learning and artificial intelligence applications in soil and water conservation," Journal of Soil and Water Conservation. Soil and Water Conservation Society, pp. 113A-118A. Available at: https://doi.org/10.2489/JSWC.74.6.113A.
Deng et al. (2025) "Development and validation of interpretable machine learning models to predict distant metastasis and prognosis of muscle-invasive bladder cancer patients," Scientific Reports, 15(1). Available at: https://doi.org/10.1038/s4l598-025-96089-1.
Denoroy et al. 2012. Vers un raisonnement innovant de la fertilisation phosphatée. Innovations Agronomiques 25: 219-230
Devatman et al. (2025) Proceedings of 0 th Moral and Legal AI Alignment Symposium Joint International Association for Computing and Philosophy (IACAP) and the Society for the Study of Artificial Intelligence and Simulation ofBehaviour (AISB) Conference on Philosophy of Computing and AI (IACAP/AISB-25)*.*
Dhillon et al. 2019. World Potassium Use Efficiency in Cereal Crops. Agron. J. 111:889-896 doi: 1 0.21 34/agronj20 18.07.0462
Dise, N.B. et al. (2009) "Predicting dissolved inorganic nitrogen leaching in European forests using two independent databases," Science of the Total Environment, 407(5), pp. 1798-1808. Available at: https://doi.org/10.1016/j.sci-totenv.2008.11.003.
Dobermann, A. et al. (2022) "Responsible plant nutrition: A new paradigm to support food system transformation," Global Food Security, 33. Available at: https://doi.org/10.1016/j.gfs.2022.100636.
Dobermann, A. et al. (2022) "Responsible plant nutrition: A new paradigm to support food system transformation," Global Food Security, 33. Available at: https://doi.org/10.1016/j.gfs.2022.100636.
Elith, J., Leathwick, J.R. and Hastie, T. (2008) "A working guide to boosted regression trees," Journal of Animal Ecology, pp. 802-813. Available at: https://doi.org/10.1111/j.1365-2656.2008.01390.x.
Fardeau et al. 1988. Pourquoi choisir la méthode Olsen pour estimer le phosphore assimilable des sols ? Agronomie 8(7):577-584
Findenegg et al. 1986. Proton balance of plants: physiological, agronomical & ecological implications. Netherlands J. Agric. Sci. 34 : 371-379
Freund, Y. and Schapire, R.E. (1999) A Short Introduction to Boosting, Journal of Japanese Society for Artificial Intelligence. Available at: www.research.att.com/.
Friedman 2001. Greedy function approximation: a gradient boosting machine 1, The Annals of Statistics*.*
Gigerenzer, G. and Luan, S. (2022) "Smart heuristics for individuals, teams, and organizations." Available at: https://doi.org/10.1146/annurev-orgpsych-012420.
Green, D.G. (2023) "Emergence in complex networks of simple agents," Journal of Economic interaction and Coordination, 18(3), pp. 419-462. Available at: https://doi.org/10.1007/s11403-023-00385-w.
Guejjoud et al. (2025) "Century-Long Analysis of Nitrogen and Phosphorus Surplus in French Agriculture: Trends and Drivers," Global Biogeochemical Cycles, 39(3). Available at: https://doi.org/10.1029/2024GB008184.
Guilbeault et al. (2018) "Social learning and partisan bias in the interpretation of climate trends," Proceedings of the National Academy of Sciences of the United States of America, 115(39), pp. 9714-9719. Available at: https://doi.org/10.1073/pnas.1722664115.
Guilbeault et al. (2021) "Probabilistic social learning improves the public's judgments of news veracity," PLoS ONE, 16(3 March). Available at: https://doi.org/10.1371/journal.pone.0247487.
Halpin, H. (2025) "Artificial intelligence versus collective intelligence," AI and Society [Preprint]. Available at: https://doi.org/10.1007/s00146-025-02240-x.
Jeong, J.H. et al. (2016) "Random forests for global and regional crop yield predictions," PLoS ONE, 11(6). Available at: https://doi.org/10.1371/journal.pone.0156571.
Jordan-Meille et al. 2012. An overview of fertilizer-P recommendations in Europe: soil testing, calibration and fertilizer recommendations. Soil Use and Management, December 2012, 28, 419-435 / doi: 10.1111/j.1475-2743.2012.00453.x
Jordan-Meille 2009. Comparaison des méthodes de raisonnement de la fertilisation P en Europe : quels diagnostics pour quelles préconisations ? 9ièmes Rencontres de la fertilisation raisonnée et de l'analyse de la terre COMIFER, 25-26/11/2009.
Kannan 2025a. Applying big data analytics to optimize resource use and boost farm efficiency," in Transforming Agriculture for the Digital Age: Integrating Artificial Intelligence, Cloud Computing, and Big Data Solutions for Sustainable and Smart Farming Systems. Deep Science Publishing, pp.102-123 / https://doi.org/10.70593/978-81-988918-6-0_6.
Kannan 2025b. Utilizing machine learning models for accurate crop prediction and yield optimization. In Transforming Agriculture for the Digital Age / Deep Science Publishing, pp.45-63. / https://doi.org/10.70593/978-81-988918-6-0_3.
Kuhn, M. (2008) Journal ofStatistical Software Building Predictive Models in R Using the caret Package. Available at: http://www.jstatsoft.org/.
Maksymiuk et al. (2021) "Landscape of R packages for eXplainable Artificial Intelligence." Available at: http://arxiv.org/abs/2009.13248.
Maleszka, M. (2025) "Social Collective as a Modular Group Modeling Tool," IEEE Access, 13, pp. 133737-133754. Available at: https://doi.org/10.1109/access.2025.3592944.
M 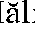 lina 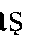 et al. 2022. Current Status and Future Prospective for Nitrogen Use Efficiency in Wheat (Triticum aestivum L.). *Plants.* MDPI / https://doi.org/10.3390/plants11020217.
M 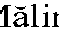 lina 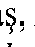 , A. *et al.* (2022) "Current Status and Future Prospective for Nitrogen Use Efficiency in Wheat (Triticum aestivum L.)," *Plants.* MDPI. Available at: https://doi.org/10.3390/plants11020217.
Mallarino et al. 1992. Comparison of Methods for Determining Critical Concentrations of Soil Test Phosphorus for Corn. Agron. J. 84:850-856.
Mccaffrey, D.F. et al. (2013) "A tutorial on propensity score estimation for multiple treatments using generalized boosted models," Statistics in Medicine, 32(19), pp. 3388-3414. Available at: https://doi.org/10.1002/sim.5753.
Mombiela et al. 1981. Method to determine the appropriate mathematical form for incorporating soil test in fertilizer response models for recommendation purposes. Agron. J. 73:937-941.
Morel et al. 1992. La fertilisation phosphatée raisonnée de la culture du blé. Agronomie 12 : 565-579
Mueller et al. 2012 Closing yield gaps through nutrient & water management. Nature doi: 10.1038/naturel1420.490:254-257. / http://www.earthstat.org/nutrient-application-major-crops/
Murrel et al. 2021 (eds). Improving Potassium Recommendations for Agricultural Crops. Springer / ISBN 978-3-030-59196-0 ISBN 978-3-030-59197-7 (eBook) https://doi.org/10.1007/978-3-030-59197-7
Myneni et al. 2015. MODIS Collection 6 (C6) LAI/FPAR Product User's Guide. Department Of Geography and Environment, Boston University Email: ranga.myneni@gmail.com Web: http://cliveg.bu.edu
Nawara et al. 2018. A comparison of soil tests for available phosphorus in long-term field experiments in Europe. European Journal of Soil Science, November 2017, 68, 873-885 / doi: 10.1111/ejss.12486
Nolan et al. (2012) "Verifiable metamodels for nitrate losses to drains and groundwater in the Corn Belt, USA," Environmental Science and Technology, 46(2), pp. 901-908. Available at: https://doi.org/10.1021/es202875e.
Nolan et al. (2018) "Metamodeling and mapping of nitrate flux in the unsaturated zone and groundwater, Wisconsin, USA," Journal of Hydrology, 559, pp. 428-441. Available at: https://doi.org/10.1016/j.jhydrol.2018.02.029.
Nolan 2015. "A statistical learning framework for groundwater nitrate models of the Central Valley, California, USA," Journal of Hydrology, 531, pp. 902-911. Available at: https://doi.org/10.1016/j.jhydrol.2015.10.025.
Olsen et al. 1954. Estimation of available phosphorus in soils by extraction with sodium bicarbonate. USDA Circ. 939.
Pereyra-Goday, F. et al. (2025) "Nitrogen use efficiency in mixed crop-livestock systems: insights for sustainable intensification," Frontiers in Sustainable Food Systems, 9. Available at: https://doi.org/10.3389/fsufs.2025.1522557.
Panagos et al. 2012. European Soil Data Centre: Response to European policy support and public data requirements. Land Use Policy 29 (2012) 329-338 / doi:10.1016/j.landusepol.2011.07.003
Piccoli, I. et al. (2025) "On-farm experimentation of anaerobic digestate distribution methods for advancing circular economy in the agroecosystem," Precision Agriculture, 26(5). Available at: https://doi.org/10.1007/s11119-025-10275-9.
Ping et al. 2015. Proton accumulation accelerated by heavy chemical nitrogen fertilization and its long-term impact on acidifying rate in a typical arable soil in the Huang-Huai-Hai Plain. Journal of Integrative Agriculture 2015, 14(1): 148-157 / doi: 10.1016/S2095-3119(14)60750-4
Pirkó, B. et al. (2020) "Results of hungarian field test trials set up for establishing new maximum permitted n dose values," Studies in Agricultural Economics, 122(2), pp. 77-85. Available at: https://doi.org/10.7896/1.2036.
Prokhorenkova et al. 2019. CatBoost: unbiased boosting with categorical features. Available via https://arxiv.org/abs/1706.09516
Quemada, M. and Lassaletta, L. (2024) "Fertilizer dependency: a new indicator for assessing the sustainability of agrosystems beyond nitrogen use efficiency," Agronomy for Sustainable Development, 44(5). Available at: https://doi.org/10.1007/s13593-024-00978-0.
Quemada, M. et al. (2020) "Exploring nitrogen indicators of farm performance among farm types across several European case studies," Agricultural Systems, 177. Available at: https://doi.org/10.1016/j.agsy.2019.102689.
Raab, M. and Gigerenzer, G. (2005) Intelligence as Smart Heuristics*.*
Rashid, M.A. et al. (2022) "Adequacy of nitrogen-based indicators for assessment of cropping system performance: A modelling study of Danish scenarios," Science of the Total Environment, 842. Available at: https://doi.org/10.1016/j.sci-totenv.2022.156927.
Ravensbergen, A.P.P. et al. (2024) "Field monitoring reveals scope to reduce environmental impact of ware potato cultiva-tion in the Netherlands without compromising yield," Agricultural Systems, 220. Available at: https://doi.org/10.1016/j.agsy.2024.104091.
Recena et al. 2022. Assessing the phosphorus demand in European agricultural soils based on the Olsen method. Journal of Cleaner Production 379 (2022) 134749 / https://doi.org/10.1016/j.jclepro.2022.134749
Ren, K. et al. (2022) "Optimizing nitrogen fertilizer use for more grain and less pollution," Journal of Cleaner Production, 360. Available at: https://doi.org/10.1016/j.jclepro.2022.132180.
Rodelll et al. 2014. The global land data assimilation system. Bull. Am. Meteor. Soc. (BAMS), March 2004, pp. 381-394. / DOI: 10.1 175/BAMS-85-3-38
Sapkota, R., Roumeliotis, K.I. and Karkee, M. (2025) "AI Agents vs. Agentic AI: A Conceptual Taxonomy, Applications and Challenges." Available at: https://doi.org/10.1016/j.inffus.2025.103599.
Siatwiinda et al. 2024. Options to reduce ranges in critical soil nutrient levels used in fertilizer recommendations by accounting for site conditions and methodology: A review. Agronomy for Sustainable Development (2024) 44:9 / https://doi.org/10.1007/sl3593-023-00943-3
Silva, J.V. et al. (2021) "Agronomic analysis of nitrogen performance indicators in intensive arable cropping systems: An appraisal of big data from commercial farms," Field Crops Research, 269. Available at: https://doi.org/10.1016/j.fcr.2021.108176.
Stefanelli, F. et al. (2016) "Collective Intelligence Heuristic: An Experimental Evidence." Available at: https://doi.org/10.1007/978-3-319-45982-0_4.
Szymańska, M. et al. (2025) "Measuring the Sustainability of Nitrogen Fertilization in EU Agriculture: A New Index-Based Assessment in the Context of Sustainable Intensification," Agronomy, 15(7). Available at: https://doi.org/10.3390/agronomy15071643.
Tang, J., Liu, G. and Pan, Q. (2021) "A Review on Representative Swarm Intelligence Algorithms for Solving Optimization Problems: Applications and Trends," IEEE/CAA Journal of Automatica Sinica. Institute of Electrical and Electronics Engineers Inc., pp. 1627-1643. Available at: https://doi.org/10.1109/JAS.2021.1004129.
Toth et al. 2013. LUCAS Topsoil Survey. Methodology, data and results. EUR26102-Joint Research Centre - Institute for Environment and Sustainability / Scientific and Technical Research series - ISSN 1831-9424 (online) ISBN 978-92-79-32542-7 (pdf) / doi: 10.2788/97922
Toth et al. 2013_bis. Continental-scale assessment of provisioning soil functions in Europe. Ecological Processes 2:32
Ussiri et al. 1998. Soil test calibration studies for formulation of phosphorus fertilizer recommendations for maize in Morogoro district, Tanzania. II. estimation of optimum fertilizer rates, Communications in Soil Science and Plant Analysis, 29:17-18, 2815-2828
Vercammen, A., Ji, Y. and Burgman, M. (2019) "The collective intelligence of random small crowds: A partial replication of Kosinski et al. (2012)," Judgment and Decision Making, 14(1), pp. 91-98. Available at: https://doi.org/10.1017/sl930297500002941.
Winnie, N. et al. (2022) "Assessment of the 2006 Abuja Fertilizer Declaration With Emphasis on Nitrogen Use Efficiency to Reduce Yield Gaps in Maize Production," Frontiers in Sustainable Food Systems, 5. Available at: https://doi.org/10.3389/fsufs.2021.758724.
Withers et al. 2014. Feed the Crop Not the Soil: Rethinking Phosphorus Management in the Food Chain. dx.doi.org/10.1021/es501670j | Environ. Sci. Technol. 2014, 48, 6523-6530
Wolpert, D.H. (2003) Theory of Collective Intelligence. Available at: http://icarc.nasa.gov/-&w.
Xia, H. et al. (2024) "Diversification of wheat-maize double cropping with legume intercrops improves nitrogen-use efficiency: Evidence at crop and cropping system levels," Field Crops Research, 307. Available at: https://doi.org/10.1016/j.fcr.2024.109262.
Yoo et al. 2021 "A New Binary Programming Formulation and Social Choice Property for Kemeny Rank Aggregation," Decision Analysis, 18(4), pp. 296-320. Available at: https://doi.org/10.1287/deca.2021.0433.
Yoo et al. 2019 "A New Correlation Coefficient for Aggregating Non-strict and Incomplete Rankings." Available at: http://arxiv.org/abs/1801.07793.
Zheng, X. et al. (2020) "Nitrogen supply modulates nitrogen remobilization and nitrogen use of wheat under supplemental irrigation in the North China Plain," Scientific Reports, 10(1). Available at: https://doi.org/10.1038/s41598-020-59877-5.
Zhou, B. et al. (2018) "Relative contribution of nitrogen absorption, remobilization, and partitioning to the ear during grain filling in chinese winter wheat," Frontiers in Plant Science, 9. Available at: https://doi.org/10.3389/fpls.2018.01351.

## Revendications

1. **Méthode de fertilisation raisonnée dite PKH interopérable en agriculture de précision et conseil agronomique** dédiés à la conservation des sols et l'agriculture durable de grandes culture à graines *non-Fabaceae* comportant la formation sur la base d'unités cartographiques locales de courbes de réponses décrivant les doses d'application d'engrais phosphoriques et potassique dPK, les seuils critiques en phosphore et potassium telluriques cPK ainsi que les pH telluriques éventuels (pHe) fonction de du taux de fertilisation azotée TUN et donc de l'objectif de rendement protéique RDN correspondant ;
> **caractérisée en ce que** une base de données APC tabulaire dbase_APC comportant des data agronomique AGRO, pédologique PEDO et climatique CLIM est compartimentée en deux sections, une à la gauche du tableau dite LHS (*left hand side,* angl.) et l'autre à droite dite RHS *(right hand side,* angl.) et que un sous-ensemble de dbase_APC dit dbase_AgroNum ne contient que des itinéraires technique iTec avec rendements unitaires RUN de l'azote fertilisant ni trop élevés, ni trop faibles de manière à conduire à la conservation de la matière organique du sol MOS du fait d'un criblage réitératif préalable de dbase_APC ;
> et aussi maintenant et surtout **caractérisé en ce que** les rRSQ à titre de data AGRO servant au rétro-calcul de RUN sont remplacés par des valeurs de dPK, tPK à titre de cPK et pHe afin de calibrer pour chacune de ces variables un algorithme d'IA prédictive ;
> et **en ce que** les relations (fonctions) [dPK ::TUN] ou [dPK ::RDN] à titre de courbes de réponse indiquent les doses d'engrais PK à appliquer au champ pour pouvoir atteindre les objectifs de rendements RDN durables selon la courbe de réponse [RDN ::TUN] au sens de CRP_EP4252516 aux alinéas [0017] à [0033] à titre de plan prévisionnel de fertilisation PK,
> et **en ce que** les relations (fonctions) [tPK ::dPK], [tPK ::RDN] ou [tPK ::TUN] à titre de courbes de réponse établissent les seuils critiques cPK au-dessous desquels les susdites doses d'engrais PK doivent impérativement être appliquées pour atteindre ces susdits objectif de rendements RDN durables,
> et **en ce que** les relations (fonctions) [pHe ::TUN] , [pHe ::RDN] voire [pHe ::dPK] à titre de courbes de réponse déterminent le statut acido-basique SAB éventuel du sol atteint durablement à ces susdits taux de fertilisation N, P & K conduisant nécessairement à la conservation de la matière organique du sol MOS ;
> et **en ce que** ces courbes de réponse sont établies en précisant l'unité cartographique placés à gauche (LHS) de la dbase_AgroNum ne contenant que ces data d'itinéraire technique iTec durables conduisant à la conservation de la matière organique du sol MOS et mises en relation avec des data pédologiques PEDO & climatiques CLIM mais placées à droite (RHS) de cette même dbase_AgroNum sachant que les data AGRO _LHS sont précises voire perfectibles tandis que les data PEDO_RHS et CLIM_RHS sont perfectibles et commensurables, seules les data AGRO de type rendements agronomiques RDT, RDN, et RUN étant donc dépourvu d'erreurs d'échantillonnage statistiquement significatives ;
> et **en ce que** cette mise en relation est par la suite effectuée à l'aide d'algèbre linéaire par des modèles multivariés conventionnels de type glm (*general linear models,* angl.), voire plus avantageusement si implémentable d'intelligence artificielle par des algorithmes non-algébrique d'apprentissage de type cbt (*catergorical boosting,* angl.) ou encore tout autre algorithme assimilable tel que par exemple *gradiant boosting* (angl.), *random-forest* (angl.) ou *XGboosting* (angl.) ;
et enfin **en ce que** l'interopérabilité est avec l'agriculture de précision AP est effectuée à l'aide d'une technologie d'agriculture de précision via une interface numérique consistant en une courbe de réponse à l'engrais azoté TUN agissant dans un premier temps comme une interface informationnelle, et dans une seconde étape opérationnelle, l'utilisateur obtenant d'abord les estimations des doses d'engrais N, P et K ainsi que la valeur de pHe, puis intégrant en relayant ces informations, numériquement ou analogiquement, auxdites technologies d'agriculture de précision afin de former, dispenser en vrais, et appliquer au champ ces doses d'engrais N, P et K sur le terrain, et ce - là encore, via toute technologie de communication, à savoir les réseaux cellulaires, le WiFi, les cartes mémoire, les *clouds* (sic), les clés USB, le téléphone ou la télécopie, ou même par de simples activations manuelles, vocales ou écrites.

2. **Méthode de fertilisation raisonnée PKH interopérables en agriculture de précision et conseil agronomique** selon la première revendication **caractérisée en ce que** ;
• **data AGRO** sont les données sur les rendements RDT et taux de fertilisation N, P et K de grandes cultures non*-Fabaceae* à graines telles que les céréales, le maïs et le colza.
• **data PEDO** sont les données physico-chimiques sur les sols arables à travers la SAU européenne, y compris donc leurs teneurs et/ou stockes en C, N, P et K, leurs pH, porosités, etc.
• **data CLIM** sont les données spatio-temporelles sur le climat et donc la météorologie, avantageusement sous forme de séries temporelles de la température, humidité, précipitations, etc.
• **R/LHS** dbase tabulaire et la base de donnée comprenant ces deux parties, une à gauche (*left hand side,* LHS) et l'autre à droite *(right hand side,* RHS) affichant l'ensemble des itinéraire technique iTec à titre d'observation, une par ligne, et leurs data AGRO, PEDO et CLIM associés.
• **RUN** est le rendement unitaire ajusté de l'azote fertilisant : rendement azoté RDN par unité de fertilisation azotée TUN à savoir ***RUN* = (run^2)/(1400 *x TUN^*(-1**.**5)**), run étant le rendement unitaire simple → RDN/TUN, tandis que ;
• **rRSQ** est simplement RUN divisé par une certaines valeur iSQ indiquant le potentiel agronomique de la parcelle, ici et avantageusement selon Toth et al. 2017_bis
• **cPK** (cP ou cK selon le cas) sont les teneurs en P & K **(tPK)** du sol à titre de seuils critiques élémentaires du sol en P & K déterminant rendant l'application des dPK impérative généralement et avantageusement ici exprimés en mg-PK par kg d'échantillon de terre analysée
• **dPK** (dP ou dK selon le cas) sont les dP₂O₅ ou dK₂O, au choix i.e. les niveaux de fertilisation en P & K recommandées apportées au sol à titre de matière fertilisante généralement en équivalant P₂O₅ et K₂O, respectivement par hectare et par année
• **pHe** est le pH tellurique (du sol) *éventuel à* un niveau de fertilisation azotée dN (TUN) tel que recommandé dans le cade de la présente méthode de fertilisation raisonnée sans pour autant avoir à recourir à des amendements ou au chaulage pour modifier ce SAB du sol
• **AIA** et un quelconque algorithme d'intelligence artificiel prédictive et **CAIAC** une forme collective ce cette IA prédictive appliquant réitérativement une règle heuristique simple consistant ici en l'élimination de dbase_APC les itinéraires techniques iTec dont rendements unitaires ajusté RUN sont soit trop élevés ou trop faibles pour conduire à la conservation de la matière organique du sol MOS,
• **glm & cbt** sont ici et à titre d'exemples des modèles prédictifs algébriques, linéaire voire multilinéaires dans le cas de glm et, dans le cas de cbt d'algorithmes dits d'intelligence artificielle prédictive avantageusement ici de type catboost (*categorical boosting),*
• **iTec** est l'itinéraire technique implémentant une pratique culturale en combinant à travers la campagne et la parcelle un ensemble cohérent d'intrants et d'outils en vue d'atteindre l'objectif de rendement selon le niveau de fertilisation préconisé,
• **unité cartographique locale** est une délimitation graphique du territoire, avantageusement numérique en mode raster ou vecteur, avantageusement ici de type NUTS (nomenclature des unités territoriales statistiques) de niveaux 2 ou 3 (NUTS2 ou 3) facilitant les comparaisons entre pays, ou entre régions, d'un même ensemble (Eurostat 2022 ; https://ec.europa.eu/eurostat/).

3. **Méthode de fertilisation raisonnée PKH interopérables en agriculture de précision et conseil agronomique** selon une quelconque des revendications précédentes **caractérisée en ce que** les *pH éventuels* (pHe) atteints lorsque les doses d'engrais N, P et K selon l'invention sont appliquées durablement au profit d'une conservation de la matière organique du sol le sont *sans* chaulage ou l'apports amendements visant à modifier le statut acido-basique SAB du sol de la parcelle.

4. **Méthode de fertilisation raisonnée PKH interopérables en agriculture de précision et conseil agronomique** selon une quelconque des revendications précédentes **caractérisée en ce que** toutes les grandes cultures à graines *non-Fabaceae* et notamment BTH (blé tendre d'hiver, *Triticum aestivum*), BTP (blé tendre de printemps, *T. aestivum*), ORH (orge d'hiver, *Hordeum vulgare*), ORP (orge de printemps, *H. vulgare*), SCL (seigle, *Secale cereale),* TRC (triticale, *Triticosecal* spp.), AVN (avoine, *Avena sativa*), CLZ (colza, *Brassica napus),* ZEA (maïs-grain, Zea mays) et TSL (tournesol, *Helianthus annus*) sont concernées.

5. **Méthode de fertilisation raisonnée PKH interopérables en agriculture de précision et conseil agronomique** selon une quelconque des revendications précédentes **caractérisée en ce que** la dbase_APC tabulaire comporte des data AGRO telles que le rendement en grains (RDT), et en protéines (RDN) et de rendement en protéines par unité d'engrais azoté (RUN) compilées à l'aide de modules raster et/ou vecteur implémentables en R^{®}, Python^{®} ou une quelconque plateforme informatique équivalente ainsi que des variables pédoclimatiques PEDO & CLIM, pertinent, informatives sans être forcément bien corrélées avec lesdites variables AGRO, et cela en prenant soins que ces data APC soient géoréférencés par les coordonnées géospatiales latitudes & longitudes centroïdes les plus au centre de parcelle sachant que les données pédoclimatiques PEDO & CLIM peuvent, elles, être télédétectées ou obtenues à l'aide de fonctions de pédo-transfert.

6. **Méthode de fertilisation raisonnée PKH interopérables en agriculture de précision et conseil agronomique** selon selon une quelconque des revendications précédentes **caractérisée en ce que** la dbase_AgroNum, sous-ensemble de la dbase_APC ne comportant plus que des iTec aux rendements unitaires ajustés RUN conduisant à la conservation de la matière organique du sol MOS du fait du criblage de dbase_APC de manière à retenir que les itinéraires techniques durables au sens entendus dans BMK_EP4101280 aux alinéas [0018] à [0023] contient maintenant à titre de variables AGRO de valeurs de dPK et des teneurs telluriques en P & K (tPK) au niveau de la parcelle et qu'il n'est plus nécessaire de recours à la prédiction de rRSQ et/ou l'ajustement par un indice iSQ de productivité du sol puisque dbase_AgonNum a déjà servie à l'élaboration des courbes de réponse à l'azote fertilisant CRP au sens de CRP_EP4252516 alinéas [0020] à [00030] et notamment de [0028] à [0030], sachant que ces variables AGRO dPK, tPK à titre de cPK et pHe prédites par AIA calibrée selon dbase_AgroNum - sous-ensemble de dbase_APC, sont maintenant placées dans la partie gauche LHS de la dbase_AgroNum tabulaire.

7. **Méthode de fertilisation raisonnée PKH interopérables en agriculture de précision et conseil agronomique** selon une quelconque des revendications précédentes **caractérisée en ce que** l'extension géographique de ces prédictions des variables AGRO - soit ici dPK, cPK via tPK, et pHe, à l'ensemble des parcelles agricoles de la SAU - soit avantageusement ici à travers l'Europe y compris le Royaume-Uni et la Turquie, en veillant à ce qu'il y ait plusieurs et préférablement au moins huit (8) observations d'itinéraires techniques iTec par unité cartographiques pour établir une relation cPK :: dPK et donc implicite cPK :: TUN et pHe :: TUN statistiquement significative.

8. **Méthode de fertilisation raisonnée PKH interopérables en agriculture de précision et conseil agronomique** selon la revendication précédente **caractérisée en ce que** et sachant que le nombre d'unités cartographiques locales de type NUTS2 au sein de l'UE - soit près de 400, il faille entrevoir réaliser de 4 à 5 000 ce prédictions, voire 10 fois plus si on utiliser comme unité cartographique locale plus petite, par exemple de type NUTS3.

9. **Méthode de fertilisation raisonnée PKH interopérables en agriculture de précision et conseil agronomique** selon une quelconque des revendications précédentes **caractérisée en ce que** l'établissement desdites relations [dPK :: TUN], [cPK :: dPK] et [pHe :: TUN] ce fait maintenant à l'aide de modèles linéaires de type glm (*general linear models),* ou encore multilinéaires s'il faut plus de précision, comportant au moins les coordonnées latitude & longitude centroïdes les plus au centre de la parcelle, un quelconque indice de productivité de la parcelle - avantageusement et à titre d'exemple iSQ (alias « sqicrop » ; Toth et al. 2013_bis), ou encore une certaine valeur de la teneur en argile de la parcelle de manière à ce que pour chaque unité cartographique locale ces valeurs de TUN (dN), dPK, cPK et pH puissent facilement être mises en relation.

10. **Méthode de fertilisation raisonnée PKH interopérables en agriculture de précision et conseil agronomique** selon une quelconque des revendications précédentes **caractérisée en ce que** et de manière à être acceptables aux utilisateurs de plan prévisionnels de fertilisation PPF plus conventionnels et actuellement reconnus à travers l'Europe il faut contraindre ces recommandations doses d'engrais dPK, seuils critique cPK et pH telluriques éventuels pHe de manière à ce qu'ils soient commensurables avec les références habituelles selon l'état de la technique.

11. **Méthode de fertilisation raisonnée PKH interopérables en agriculture de précision et conseil agronomique** selon la revendication précédente **caractérisée en ce que** les pHe - eau ou CaCl₂, sont commensurables à ceux proposés par le conseil agricole via analyse de terre et/ou de base de données reconnues, les rendements phosphoriques RDP & RDK sont commensurables aux doses dPK recommandées par le PPF afin d'assurer le remplacement durable des éléments exportés, et les seuils cPK sont, eux, commensurables aux disponibilités - alias fournitures du sol en de P et K telluriques (*available_PK,* angl.) avantageusement à et à titre d'exemple pour ce qui est du P tellurique proposées Ballabio et al. 2019.

12. **Méthode de fertilisation raisonnée PKH interopérables en agriculture de précision et conseil agronomique** selon les deux revendications précédentes **caractérisée ;**
• **en ce que** les seuils cP conventionnels peuvent être estimés sont établit empiriquement à l'aide d'une simple régression linéaire multivariable comprenant ad minima les teneurs en argiles, le pH du sol, ainsi que la pluviométrie, avantageusement selon une équation de type ***cP = a*** - ***b x argile - c x pH** - **d x pluviométrie*** sachant que ces cP conventionnels sont exprimés en P_Olsen (mg_P/kg_sol) et que les coefficients **a** de la susdite équation sont de 40 à 60 et avantageusement de 51.5, **b** entre 0.008 et 0.012 et avantageusement de 0.011 g/kg, c entre 4 et 5 et avantageusement de 4.3, et enfin **d** entre 0.006 et 0.010 et avantageusement de 0.008 mm/année,
• et **en ce que** les seuils cK conventionnels à titre de références sont établit empiriquement à l'aide d'une simple régression linéaire, voire multilinéaire, comprenant ad minima une la capacité d'échange cationique CEC du sol selon une équation à titre d'exemple du type ***cK*** = **75** + ***a x CEC*** , sachant que la valeur du coefficient **a** de ce équation et de 2 à 3 et avantageusement de 2.5.

13. **Méthode de fertilisation raisonnée PKH interopérables en agriculture de précision et conseil agronomique** selon les trois revendications précédentes **caractérisée en ce que** les susdites contraintes par rapport doses dPK recommandées, , pH tellurique références et seuils critiques cPK communément utilisés à travers l'Europe sont exprimées formellement - par exemple ici à titre d'exemple non limitatif en langage R^{®}, comme suit ;
| | |
|---|---|
| abs(1-pHwater/esdac_pHwater) | <= 0.10, soit de 0.05 à 0.12 |
| abs(1-pHcacl2/esdac_pHcacl2) | <= 0.10, soit de 0.05 à 0.12 |
| abs(1-RDP2O5/dP2O5) | <= 0.10, soit de 0.05 à 0.12 |
| abs(1-RDK2O/dK2O) | <= 0.10, soit de 0.05 à 0.12 |
| abs(1-(available_P/(cP*2*bd))) | <= 0.20, soit de 0.15 à 0.25 |
| abs(1-(available_K/(cK*2*bd))) | <= 0.20, soit de 0.15 à 0.25 |
| abs(1-cP/europe_cP) | <= 0.33, soit de 0.25 à 0.50 |
| abs(1-cK/europe_cK) | <= 0.50, soit de 0.33 à 0.67 |

14. **Méthode de fertilisation raisonnée PKH interopérables en agriculture de précision et conseil agronomique** selon une quelconque des revendications précédentes **caractérisé en ce que** l'interopérabilité avec l'agriculture de précision AP est effectuée à l'aide d'une technologie d'agriculture de précision via une interface numérique consistant en une courbe de réponse à l'engrais azoté TUN agissant dans un premier temps comme une interface informationnelle, et dans une seconde étape opérationnelle, l'utilisateur obtenant d'abord les estimations dNPKH, puis intégrant en relayant ces informations, numériquement ou analogiquement, auxdites technologies d'agriculture de précision afin de former, dispenser en vrais, et appliquer au champ ces doses d'engrais dNPKH sur le terrain, et ce - là encore, via toute technologie de communication, à savoir les réseaux cellulaires, le WiFi, les cartes mémoire, les clouds, les clés USB, le téléphone ou la télécopie, ou même par de simples activations manuelles, vocales ou écrites si nécessaire.

## Revendications modifiées

### Revendications modifiées conformément à la règle 137(2) CBE.

1. **Méthode de fertilisation raisonnée dite PKH interopérable en agriculture de précision et conseil agronomique** dédiés à la conservation des sols et l'agriculture durable de grandes culture à graines non-*Fabaceae* comportant la formation sur la base d'unités cartographiques locales de courbes de réponses décrivant les doses d'application d'engrais phosphoriques et potassique dPK, les seuils critiques en phosphore et potassium telluriques cPK ainsi que les pH telluriques éventuels (pHe) fonction de du taux de fertilisation azotée TUN et donc de l'objectif de rendement protéique RDN correspondant comprenant ;
> une base de données APC tabulaire dbase_APC comportant des data agronomique AGRO, pédologique PEDO et climatique CLIM est compartimentée en deux sections, une à la gauche du tableau dite LHS (*left hand side,* angl.) et l'autre à droite dite RHS (*right hand side*, angl.) et que un sous-ensemble de dbase_APC dit dbase_AgroNum ne contient que des itinéraires technique iTcc avec rendements unitaires RUN de l'azote fertilisant ni trop élevés, ni trop faibles de manière à conduire à la conservation de la matière organique du sol MOS du fait d'un criblage réitératif préalable de dbase_APC, sachant que les rRSQ à titre de data AGRO servant au rétro-calcul de RUN sont remplacés par des valeurs de dPK, tPK à titre de cPK et pHe afin de calibrer pour chacune de ces variables un algorithme d'IA prédictive ;
> des relations (fonctions) dPK::TUN ou dPK::RDN à titre de courbes de réponse indiquant les doses d'engrais PK à appliquer au champ pour pouvoir atteindre les objectifs de rende-mcnts RDN durables sclon la courbe de réponse RDN::TUN au sens de EP4252516 aux alinéas [0017] à [0033] à titre de plan prévisionnel de fertilisation PK,
> des relations (fonctions) tPK::dPK, tPK::RDN ou tPK::TUN à titre de courbes de réponse établissant les seuils critiques cPK au-dessous desquels les susdites doses d'engrais PK doivent impérativement être appliquées pour atteindre ces susdits objectif de rendements RDN durables,
> des relations (fonctions) pHe::TUN , pHe::RDN voire pHe::dPK à titre de courbes de réponse déterminant le statut acido-basique SAB éventuel du sol atteint durablement à ces susdits taux de fertilisation N, P & K conduisant nécessairement à la conservation de la matière organique du sol MOS ;
> sachant que ces courbes de réponse sont établies en précisant l'unité cartographique placés à gauche (LHS) de la dbase_AgroNum ne contenant que ces data d'itinéraire technique iTec durables conduisant à la conservation de la matière organique du sol MOS et mises en relation avec des data pédologiques PEDO & climatiques CLIM mais placées à droite (RHS) de cette même dbase_AgroNum sachant que les data AGRO_LHS sont précises voire perfectibles tandis que les data PEDO_RHS et CLIM_RHS sont perfectibles et commensurables, seules les data AGRO de type rendements agronomiques RDT, RDN, et RUN étant donc dépourvu d'erreurs d'échantillonnage statistiquement significatives ;
> et que cette mise en relation est par la suite effectuée à l'aide d'algèbre linéaire par des modèles multivariés conventionnels de type glm (*general linear models*, angl.), voire plus avantageusement si implémentable d'intelligence artificielle par des algorithmes non-algébrique d'apprentissage de type cbt (*catergorical boosting*, angl.) ou encore tout autre algorithme assimilable tel que par exemple *gradiant boosting* (angl.), *random-forest* (angl.) ou *XGboosting* (angl.) ;
et cela lorsque l'interopérabilité est avec l'agriculture de précision AP est effectuée à l'aide d'une technologie d'agriculture de précision via une interface numérique consistant en une courbe de réponse à l'engrais azoté TUN agissant dans un premier temps comme une interface informationnelle, et dans une seconde étape opérationnelle, l'utilisateur obtenant d'abord les estimations des doses d'engrais N, P et K ainsi que la valeur de pHe, puis intégrant en relayant ces informations, numériquement ou analogiquement, auxdites technologies d'agriculture de précision afin de former, dispenser en vrais, et appliquer au champ ces doses d'engrais N, P et K sur le terrain, et ce - là encore, via toute technologie de communication, à savoir les réseaux cellulaires, le WiFi, les cartes mémoire, les *clouds* (sic), les clés USB, le téléphone ou la télécopie, ou même par de simples activations manuelles, vocales ou écrites, et enfin en précisant que ;
• **data AGRO** sont les données sur les rendements RDT et taux de fertilisation N, P et K de grandes cultures non*-Fabaceae* à graines telles que les céréales, le maïs et le colza
• **data PEDO** sont les données physico-chimiques sur les sols arables à travers la SAU européenne, y compris donc leurs teneurs et/ou stockes en C, N, P et K, leurs pH, porosités, etc.
• **data CLIM** sont les données spatio-temporelles sur le climat et donc la météorologie, avantageusement sous forme de séries temporelles de la température, humidité, précipitations, etc.
• **R/LHS** dbase tabulaire et la base de donnée comprenant ces deux parties, une à gauche (*left hand side*, LHS) et l'autre à droite (*right hand side*, RHS) affichant l'ensemble des itinéraire technique iTec à titre d'observation, une par ligne, et leurs data AGRO, PEDO et CLIM associés.
• **RUN** est le rendement unitaire ajusté de l'azote fertilisant : rendement azoté RDN par unité de fertilisation azotée TUN à savoir ***RUN*** = (***run*^2**)/(**1400 *x TUN*^**(-**1. 5**) ), run étant le rendement unitaire simple → RDN/TUN
• **rRSQ** est simplement RUN divisé par une certaines valeur iSQ indiquant le potentiel agronomique de la parcelle
• **cPK** (cP ou cK selon le cas) sont les teneurs en P & K (**tPK**) du sol à titre de seuils critiques élémentaires du sol en P & K déterminant rendant l'application des dPK impérative généralement et avantageusement ici exprimés en mg-PK par kg d'échantillon de terre analysée
• **dPK** (dP ou dK selon le cas) sont les dP₂O₅ ou dK₂O, au choix i.e. les niveaux de fertilisation en P & K recommandées apportées au sol à titre de matière fertilisante généralement en équivalant P₂O₅ et K₂O, respectivement par hectare et par année
• **pHe** est le pH tellurique (du sol) *éventuel* à un niveau de fertilisation azotée dN (TUN) tel que recommandé dans le cade de la présente méthode de fertilisation raisonnée sans pour autant avoir à recourir à des amendements ou au chaulage pour modifier ce SAB du sol
• **AIA** et un quelconque algorithme d'intelligence artificiel prédictive et **CAIAC** une forme collective ce cette IA prédictive appliquant réitérativement une règle heuristique simple consistant ici en l'élimination dc dbasc_APC les itinéraires techniques iTcc dont rendements unitaires ajusté RUN sont soit trop élevés ou trop faibles pour conduire à la conservation de la matière organique du sol MOS
• **glm** & **cbt** sont ici et à titre d'exemples des modèles prédictifs algébriques, linéaire voire multilinéaires dans le cas de glm et, dans le cas de cbt d'algorithmes dits d'intelligence artificielle prédictive
• **iTec** est l'itinéraire technique implémentant une pratique culturale en combinant à travers la campagne et la parcelle un ensemble cohérent d'intrants et d'outils en vue d'atteindre l'objectif de rendement selon le niveau de fertilisation préconisé
• **unité cartographique locale** est une délimitation graphique du territoire, avantageusement numérique en mode raster ou vecteur, avantageusement ici de type NUTS (nomenclature des unités territoriales statistiques) de niveaux 2 ou 3 (NUTS2 ou 3) facilitant les comparaisons entre pays, ou entre régions, d'un même ensemble.

2. **Méthode de fertilisation raisonnée PKH interopérables en agriculture de précision et conseil agronomique** selon une quelconque des revendications précédentes comprenant ces *pH éventuels* (pHe) atteints lorsque les doses d'engrais N, P et K selon l'invention sont appliquées durablement au profit d'une conservation de la matière organique du sol le sont *sans* chaulage ou l'apports amendements visant à modifier le statut acido-basique SAB du sol de la parcelle.

3. **Méthode de fertilisation raisonnée PKH interopérables en agriculture de précision et conseil agronomique** selon une quelconque des revendications précédentes applicable à toutes les grandes cultures à graines non-*Fabaceae* et notamment BTH (blé tendre d'hiver, *Triticum aestivum*), BTP (blé tendre de printemps, *T. aestivum*), ORH (orge d'hiver, *Hordeum vulgare*), ORP (orge de printemps, *H. vulgare*), SCL (seigle, *Secale cereale*), TRC (triticale, *Triticosecal* spp.), AVN (avoine, *Avena saliva*), CLZ (colza, *Brassica napus*), ZEA (maïs-grain, Zea mays) et TSL (tournesol, *Helianthus annus*) sont concernées.

4. **Méthode de fertilisation raisonnée PKH interopérables en agriculture de précision et conseil agronomique** selon une quelconque des revendications précédentes lorsque la dbase_APC tabulaire comporte des data AGRO telles que le rendement en grains (RDT), et en protéines (RDN) et de rendement en protéines par unité d'engrais azoté (RUN) compilées à l'aide de modules raster et/ou vecteur ainsi que des variables pédoclimatiques PEDO & CLIM, pertinent, informatives sans être forcément bien corrélées avec lesdites variables AGRO, et cela en prenant soins que ces data APC soient géoréférencés par les coordonnées géospatiales latitudes & longitudes centroïdes les plus au centre de parcelle sachant que les données pédoclimatiques PEDO & CLIM peuvent, elles, être télédétectées ou obtenues à l'aide de fonctions de pédo-transfert.

5. **Méthode de fertilisation raisonnée PKH interopérables en agriculture de précision et conseil agronomique** selon une quelconque des revendications précédentes lorsque la dbase_AgroNum, sous-ensemble de la dbase_APC ne comportant plus que des iTec aux rendements unitaires ajustés RUN conduisant à la conservation de la matière organique du sol MOS du fait du criblage de dbase_APC de manière à retenir que les itinéraires techniques durables au sens entendus dans EP4101280 aux alinéas [0018] à [0023] contient maintenant à titre de variables AGRO de valeurs de dPK et des teneurs telluriques en P & K (tPK) au niveau de la parcelle et qu'il n'est plus nécessaire de recours à la prédiction de rRSQ et/ou l'ajustement par un indice iSQ de productivité du sol puisque dbase_AgonNum a déjà servie à l'élaboration des courbes de réponse à l'azote fertilisant CRP au sens de EP4252516 alinéas [0020] à [0030] et notamment de [0028] à [0030], sachant que ces variables AGRO dPK, tPK à titre de cPK et pHe prédites par AIA calibrée selon dbase_AgroNum - sous-ensemble de dbase_APC, sont maintenant placées dans la partie gauche LHS de la dbase_AgroNum tabulaire.

6. **Méthode de fertilisation raisonnée PKH interopérables en agriculture de précision et conseil agronomique** selon une quelconque des revendications précédentes comportant l'extension géographique de ces prédictions des variables AGRO - soit ici dPK, cPK via tPK, et pHe, à l'ensemble des parcelles agricoles de la SAU - soit avantageusement ici à travers l'Europe y compris le Royaume-Uni et la Turquie, en veillant à ce qu'il y ait plusieurs et préférablement au moins huit (8) observations d'itinéraires techniques iTec par unité cartographiques pour établir une relation cPK::dPK et donc implicite cPK::TUN et pHe::TUN statistiquement significative.

7. **Méthode de fertilisation raisonnée PKH interopérables en agriculture de précision et conseil agronomique** selon la revendication précédente sachant que le nombre d'unités cartographiques locales de type NUTS2 au sein de l'UE - soit près de 400, il faille entrevoir réaliser de 4 à 5 000 ce prédictions, voire 10 fois plus si on utiliser comme unité cartographique locale plus petite, par exemple de type NUTS3.

8. **Méthode de fertilisation raisonnée PKH interopérables en agriculture de précision et conseil agronomique** selon une quelconque des revendications précédentes comprenant l'établissement desdites relations dPK::TUN, cPK::dPK et pHe::TUN à l'aide de modèles linéaires de type glm (*general linear models*), ou encore multilinéaires s'il faut plus de précision, comportant au moins les coordonnées latitude & longitude centroïdes les plus au centre de la parcelle, un quelconque indice de productivité de la parcelle, ou encore une certaine valeur de la teneur en argile de la parcelle de manière à ce que pour chaque unité cartographique locale ces valeurs de TUN (dN), dPK, cPK et pH puissent facilement être mises en relation.

9. **Méthode de fertilisation raisonnée PKH interopérables en agriculture de précision et conseil agronomique** selon une quelconque des revendications précédentes et de manière à être acceptables aux utilisateurs de plan prévisionnels de fertilisation PPF conventionnels et actuellement reconnus à travers l'Europe comprenant la contrainte de ces recommandations de doses d'engrais dPK, seuils critique cPK et pH telluriques éventuels pHe de manière à ce qu'ils soient commensurables avec les références habituelles selon l'état de la technique.

10. **Méthode de fertilisation raisonnée PKH interopérables en agriculture de précision et conseil agronomique** selon la revendication précédente lorsque les pHe - eau ou CaCl₂, sont commensurables à ceux proposés par le conseil agricole via analyse de terre et/ou de base de données reconnues, les rendements phosphoriques RDP & RDK sont commensurables aux doses dPK recommandées par le PPF afin d'assurer le remplacement durable des éléments exportés, et les seuils cPK sont, eux, commensurables aux disponibilités - alias fournitures du sol en de P et K telluriques (*available*_*PK*, angl.).

11. **Méthode de fertilisation raisonnée PKH interopérables en agriculture de précision et conseil agronomique** selon les deux revendications précédentes sachant que ;
• les seuils cP conventionnels sont établit empiriquement à l'aide d'une simple régression linéaire multivariable comprenant ad minima les teneurs en argiles, le pH du sol, ainsi que la pluviométrie, avantageusement selon une équation de type ***cP* = *a* - *b x argile*** - ***c x pH - d x pluviométrie*** sachant que ces cP conventionnels sont exprimés en P_Olsen (mg_P/kg_sol) et que les coefficients **a** de la susdite équation sont de 40 à 60 et avantageusement de 51.5, **b** entre 0.008 et 0.012 et avantageusement de 0.011 g/kg, **c** entre 4 et 5 ct avantageusement de 4.3, ct enfin **d** entre 0.006 ct 0.010 ct avantageusement de 0.008 mm/année,
• les seuils cK conventionnels à titre de références sont établit empiriquement à l'aide d'une simple régression linéaire, voire multilinéaire, comprenant ad minima une la capacité d'échange cationique CEC du sol selon une équation à titre d'exemple du type ***cK* = 75 +** ***a x CEC*** , sachant que la valeur du coefficient **a** de ce équation et de 2 à 3 et avantageusement de 2.5.

12. **Méthode de fertilisation raisonnée PKH interopérables en agriculture de précision et conseil agronomique** selon les trois revendications précédentes lorsque les susdites contraintes par rapport aux doses dPK recommandées, pH tellurique références et seuils critiques cPK communément utilisés à travers l'Europe sont exprimées formellement comme suit ;
| | |
|---|---|
| abs(1-pHwater/esdac_pHwater) | <= 0.10, soit de 0.05 à 0.12 |
| abs(1-pHcacl2/esdac_pHcacl2) | <= 0.10, soit de 0.05 à 0.12 |
| abs(1-RDP2O5/dP2O5) | <= 0.10, soit de 0.05 à 0.12 |
| abs(1-RDK2O/dK2O) | <= 0.10, soit de 0.05 à 0.12 |
| abs(1-(available_P/(cP*2*bd))) | <= 0.20, soit de 0.15 à 0.25 |
| abs(1-(aisailable K/(cK*2*bd))) | <= 0.20, soit de 0.15 à 0.25 |
| abs(1-cP/europe_cP) | <= 0.33, soit de 0.25 à 0.50 |
| abs(1-cK/europe_cK) | <= 0.50, soit de 0.33 à 0.67 |

13. **Méthode de fertilisation raisonnée PKH interopérables en agriculture de précision et conseil agronomique** selon une quelconque des revendications précédentes de manière à ce que l'interopérabilité avec l'agriculture de précision AP est effectuée à l'aide d'une technologie d'agriculture de précision via une interface numérique consistant en une courbe de réponse à l'engrais azoté TUN agissant dans un premier temps comme une interface informationnelle, et dans une seconde étape opérationnelle, l'utilisateur obtenant d'abord les estimations dNPKH, puis intégrant en relayant ces informations, numériquement ou analogiquement, auxdites technologies d'agriculture de précision afin de former, dispenser en vrais, et appliquer au champ ces doses d'engrais dNPKH sur le terrain, et ce - là encore, via toute technologie de communication, à savoir les réseaux cellulaires, le WiFi, les cartes mémoire, les *clouds*, les clés USB, le téléphone ou la télécopie, ou même par de simples activations manuelles, vocales ou écrites si nécessaire.
